# EUROPEAN PATENT APPLICATION

(11) **EP 4 765 966 A1**
(43) Date of publication of application: **24.06.2026**
(21) Application number: 24911564.3
(22) Date of filing: 27.12.2024
(51) Int. Cl.: H04W 60/00

(54) **SATELLITE NETWORK REGISTRATION METHOD AND SYSTEM, AND RELATED APPARATUS**

(30) Priority: 29.12.2023 CN 202311866425; 27.03.2024 CN 202410370579
(71) Applicant: HUAWEI TECHNOLOGIES CO., LTD., Shenzhen 518129 (CN)
(72) Inventor: SHEN, Qiuchen, Shenzhen, Guangdong 518129 (CN); LIN, Lixin, Shenzhen, Guangdong 518129 (CN); LI, Zhenzhou, Shenzhen, Guangdong 518129 (CN); BAI, Jiaxuan, Shenzhen, Guangdong 518129 (CN); GAN, Wenyu, Shenzhen, Guangdong 518129 (CN); YAO, Zhendong, Shenzhen, Guangdong 518129 (CN)
(74) Representative: Maiwald GmbH
(86) International application number: PCT/CN2024/143436
(87) International publication number: WO 2025/140648

(57) **Abstract**

This application discloses a satellite network registration method, a system, and a related apparatus. A terminal receives preconfigured broadcast information sent by a server, where the preconfigured broadcast information includes a correspondence between location information and a beam broadcast message; the terminal obtains first location information of a first location of the terminal; the terminal determines a first beam broadcast message based on the first location information and the preconfigured broadcast information, where the first beam broadcast message includes N data frames; the terminal receives the first X data frames of a second beam broadcast message sent by a satellite device, where X is less than N; and when the terminal determines that the first X data frames of the first beam broadcast message are the same as the first X data frames of the second beam broadcast message, the terminal sets up a radio resource control RRC connection to the satellite device based on the first beam broadcast message. In this way, the terminal does not need to receive the complete second beam broadcast message, so that time for receiving the broadcast message by the terminal is reduced, and the terminal accesses the satellite device more quickly.

## Description

This application claims priorities to Chinese Patent Application No. 202311866425.6, filed with the China National Intellectual Property Administration on December 29, 2023 and entitled "SATELLITE NETWORK REGISTRATION METHOD, SYSTEM, AND RELATED APPARATUS", and to Chinese Patent Application No. 202410370579.4, filed with the China National Intellectual Property Administration on March 27, 2024 and entitled "SATELLITE NETWORK REGISTRATION METHOD, SYSTEM, AND RELATED APPARATUS", both of which are incorporated herein by reference in their entireties.

### TECHNICAL FIELD

This application relates to the communication field, and in particular, to a satellite network registration method, a system, and a related apparatus.

### BACKGROUND

Nowadays, some terminals support a satellite communication function. With development of communication technologies, increasing terminals will support the satellite communication function. The terminal having the satellite communication function may perform communication via a satellite in an area that is not covered by mobile communication, that cannot be covered by mobile communication, or in which a communication system is damaged, for example, an ocean, a desert, a grassland, a high altitude, or an uninhabited area.

Because a distance between the terminal and the satellite is long and a bandwidth is narrow, a signaling delay between the terminal and the satellite is long. In a satellite communication process, it takes a long time for the terminal to register with a satellite network, a large quantity of air interface resources are occupied, and power consumption of the terminal is high.

### SUMMARY

This application provides a satellite network registration method, a system, and a related apparatus, to determine a stored beam broadcast message based on location information of a location of a terminal, and set up a radio resource control connection to a satellite device based on the stored beam broadcast message, so as to reduce time for the terminal to receive the beam broadcast message sent by the satellite device.

According to a first aspect, this application provides a satellite network registration method, including: A terminal obtains first location information of a first location of the terminal; the terminal determines a first beam broadcast message based on the first location information and first information, where the first information includes a correspondence between location information and a beam broadcast message, or the first information includes a correspondence between the location information and a beam ID and a correspondence between the beam ID and the beam broadcast message, and the first beam broadcast message includes N data frames; the terminal receives the first X data frames of a second beam broadcast message sent by a satellite device, where X is less than N; and when the terminal determines that the first X data frames of the first beam broadcast message are the same as the first X data frames of the second beam broadcast message, the terminal sets up a radio resource control RRC connection to the satellite device based on the first beam broadcast message. In this way, the terminal determines the first beam broadcast message based on the first information and the first location information of the terminal, and sets up the RRC connection to the satellite device based on the first beam broadcast message, so that the terminal does not need to receive the complete second beam broadcast message, time for receiving the broadcast message by the terminal is reduced, and the terminal can access the satellite device more quickly.

In a possible implementation, the method further includes: When the terminal determines that the first beam broadcast message is different from the second beam broadcast message, the terminal continues to receive the second beam broadcast message; and the terminal sets up the RRC connection to the satellite device based on the second beam broadcast message. In this way, when determining that the first information does not include a beam broadcast message whose content is the same as that of the second beam broadcast message, the terminal may continue to receive the second beam broadcast message, so that the terminal can successfully set up the RRC connection to the satellite device.

In a possible implementation, the method further includes: If the terminal fails to set up the radio resource control RRC connection to the satellite device based on the first beam broadcast message, the terminal continues to receive the second beam broadcast message; and the terminal sets up the RRC connection to the satellite device based on the second beam broadcast message. In this way, after failing to set up the RRC connection to the satellite device based on the first beam broadcast message, the terminal may continue to receive the second beam broadcast message sent by the satellite device, and set up the RRC connection to the satellite device based on the second beam broadcast message, to ensure that the terminal can successfully set up the RRC connection to the satellite device.

In a possible implementation, before the terminal sets up the RRC connection to the satellite device, the method further includes: The terminal successfully registers with the satellite device; and the terminal disconnects the RRC connection to the satellite device at a first time point.

That the terminal sets up the RRC connection to the satellite device specifically includes: The terminal sets up the RRC connection to the satellite device at a second time point after the first time point. After the terminal sets up the RRC connection to the satellite device, the method further includes: When determining that a time difference between the first time point and the second time point is less than preset duration, the terminal sends a location area update request to the satellite device, where the location area update request is used to request the satellite device to allocate a temporary mobile subscriber identity TMSI and a location area code to the terminal. In this way, the terminal registers with the satellite device within the preset duration, and the satellite device stores registration information of the terminal. After setting up the RRC connection to the satellite device, the terminal can skip a registration process, and send, to the satellite device, the location area update request used to trigger an attach process, thereby reducing time for performing the registration process by the terminal.

In a possible implementation, that the terminal determines the first beam broadcast message based on the first location information and the first information specifically includes: The terminal determines, based on the first location information, the first beam broadcast message from the correspondence between the location information and the beam broadcast message of the first information; or the terminal determines, based on the first location information, a first beam ID from the correspondence between the location information and the beam ID of the first information, and determines, based on the first beam ID, the first beam broadcast message from the correspondence between the beam ID and the beam broadcast message of the first information. In this way, the terminal can directly determine the stored beam broadcast message based on the location. Alternatively, the terminal determines the beam ID based on the location. Because there is a low probability that the correspondence between the beam ID and the beam broadcast message changes, and there is a high probability that the correspondence between the location and the beam ID changes, the terminal separately stores the correspondence between the beam ID and the beam broadcast message and the correspondence between the location information and the beam ID. This helps the terminal adjust the beam ID corresponding to the location information.

In some examples, an application processor or a memory of the terminal stores the correspondence between the location information and the beam ID of the first information, and a satellite chip of the terminal stores the correspondence between the beam ID and the beam broadcast message of the first information. In this way, the terminal can directly determine, via the satellite chip, the beam broadcast message corresponding to the beam ID.

In a possible implementation, a distance between the first location and a location indicated by location information corresponding to the first beam broadcast message is less than a preset distance threshold; and/or the location indicated by the location information corresponding to the first beam broadcast message is closest to the first location. In this way, the terminal can determine the first beam broadcast message based on the location of the terminal. Because the location indicated by the location information in a first broadcast information item is closest to the first location, there is a highest probability that the content of the second beam broadcast message received by the terminal at the first location is the same as content of the first beam broadcast message in the first broadcast information item, and there is a highest probability that the terminal sets up the RRC connection to the satellite device based on the first beam broadcast message. In addition, if a distance between location coordinates indicated by the location information in the first broadcast information item and location coordinates of the first location is greater than the preset distance threshold, there is a low probability that the content of the second beam broadcast message received by the terminal is the same as the content of the first beam broadcast message in the first broadcast information item, and the terminal may receive the second beam broadcast message. This avoids a case in which the RRC connection to the satellite device fails to be set up based on the first beam broadcast message.

In a possible implementation, the first location information indicates a first area. That the terminal determines the first beam broadcast message based on the first location information and the first information specifically includes: The terminal determines the first broadcast information item that is in the first information and whose location information indicates the first area, where the first broadcast information item includes the first beam broadcast message. In this way, a server divides an area covered by a satellite beam into a plurality of areas, and when determining an area to which the first location belongs, the terminal may determine a beam broadcast message of the area.

In a possible implementation, that the terminal determines the first beam broadcast message based on the first location information and the first information specifically includes: The terminal determines M broadcast information items based on the first location information and the first information, where the M broadcast information items include the first beam broadcast message and a third beam broadcast message, and a distance between coordinates of a location indicated by location information in the M broadcast information items and the coordinates of the first location indicated by the first location information is less than a preset distance threshold; and if the terminal determines that the first X data frames of the first beam broadcast message are the same as the first X data frames of the second beam broadcast message, and the terminal determines that the first X data frames of the third beam broadcast message are different from the first X data frames of the second beam broadcast message, the terminal determines the first beam broadcast message. In this way, the terminal can determine a plurality of broadcast information items based on the first location information, and the terminal can determine whether the first X frames of the beam broadcast message in the plurality of broadcast information items are the same as the first X frames of the second beam broadcast message, to increase a probability that the terminal obtains the beam broadcast message whose first X frames are the same as the first X frames of the second beam broadcast message.

In a possible implementation, that the terminal determines the first beam broadcast message based on the first location information and the first information specifically includes: The terminal determines M beam broadcast messages based on the first location information and the first information, where the M beam broadcast messages include the first beam broadcast message and a third beam broadcast message, and a distance between the first location and a location indicated by location information corresponding to the M beam broadcast messages in the first information is less than a preset distance threshold; and if the terminal determines that the first X data frames of the first beam broadcast message are the same as the first X data frames of the second beam broadcast message, and the terminal determines that the first X data frames of the third beam broadcast message are different from the first X data frames of the second beam broadcast message, the terminal determines the first beam broadcast message. In this way, when the location corresponding to the plurality of beam broadcast messages is close to the first location of the terminal, the terminal determines whether the plurality of beam broadcast messages are the same as a downlink beam broadcast message, and determines the used beam broadcast message accordingly.

In a possible implementation, the preset distance threshold is less than or equal to a beam radius of a beam transmitted by the satellite device, or the preset distance threshold is less than or equal to a beam diameter of the beam transmitted by the satellite device. In this way, it can be ensured as much as possible that the terminal can obtain the beam broadcast message within a beam range to which the current location belongs.

In a possible implementation, that the terminal determines that the first X frames of the first beam broadcast message are different from the first X frames of the second beam broadcast message specifically includes: In a process of receiving the first X frames of the second beam broadcast message, if the terminal determines that a Y^{th} frame of the first beam broadcast message is different from a Y^{th} frame of the second beam broadcast message, the terminal determines that the first X frames of the first beam broadcast message are different from the first X frames of the second beam broadcast message, where Y is less than or equal to X. In this way, in a process of receiving the first X frames of the second beam broadcast message, the terminal determines whether the first beam broadcast message is the same as the received second beam broadcast message, so that the terminal can determine a determining result more quickly.

In a possible implementation, that the terminal determines that the first beam broadcast message is different from the second beam broadcast message specifically includes: In a process of receiving the data frame of the second beam broadcast message, if the terminal determines that the data frame of the first beam broadcast message is different from the received data frame of the second beam broadcast message, the terminal determines that the first beam broadcast message is different from the second beam broadcast message. In this way, in a process of receiving the second beam broadcast message, the terminal determines that the first beam broadcast message is different from the second beam broadcast message when determining that no data frame in the received data frames is the same as the X data frames of the first beam broadcast message in a one-to-one correspondence.

In a possible implementation, that the terminal receives the first information sent by the server specifically includes: The terminal obtains all or a part of the first information from the server over a terrestrial network. In this way, the terminal obtains the first information of the server over the terrestrial network, thereby reducing time and power consumption for the terminal to receive the beam broadcast message in a satellite network. In some examples, a part of the first information includes the correspondence between the location information and the beam ID.

In a possible implementation, the method further includes: The terminal stores location information of the terminal present when the terminal successfully registers with a satellite network and a beam broadcast message received by the terminal; and after accessing the terrestrial network, the terminal sends, to the server, the location information of the terminal present when the terminal successfully registers with the satellite network and the beam broadcast message received by the terminal. In this way, after accessing the terrestrial network, the terminal may send the location information and the beam broadcast message to the server, so that the server updates preconfigured beam information.

In a possible implementation, the method further includes: The terminal stores location information of the terminal present when the terminal successfully registers with a satellite network and a beam broadcast message received by the terminal, or the terminal stores the location information of the terminal present when the terminal successfully registers with the satellite network and a beam ID of a beam to which the beam broadcast message received by the terminal belongs. In this way, the terminal stores the correspondence between the used beam broadcast message and the location information, and when accessing the satellite network at the same location or a location near the location next time, the terminal may determine the beam broadcast message based on the stored information, thereby reducing time and power consumption for receiving the beam broadcast message by the terminal.

In a possible implementation, the method further includes: after accessing the terrestrial network, the terminal sends, to the server, the location information of the terminal present when the terminal successfully registers with the satellite network and the beam broadcast message received by the terminal; or sends, to the server, the location information of the terminal present when the terminal successfully registers with the satellite network and the beam ID of the beam to which the beam broadcast message received by the terminal belongs. In this way, the terminal sends the location information and the beam broadcast message or the location information and the beam ID to the server, and the server can collect a plurality of pieces of data of the terminal to obtain the first information, and send the first information to terminals that subscribe to a satellite communication service, so that all the terminals can share the first information, and use the stored beam broadcast message at an unfamiliar location.

According to a second aspect, this application provides a satellite network registration method, including: A server receives, over a terrestrial network, location information of a terminal that is present when the terminal successfully registers with a satellite network and that is sent by the terminal and a beam broadcast message received by the terminal, and/or the server obtains, from a satellite device, location information of a beam center of each beam and a beam broadcast message of each beam; the server determines a broadcast information item in first information based on the location information and the beam broadcast message; and the server sends, over the terrestrial network, the first information to a terminal that subscribes to a satellite communication service, where the first information is used by the terminal to set up a radio resource control RRC connection to the satellite device. In this way, the server can update the stored first information, so that the terminal in the terrestrial network can obtain a latest beam broadcast message, thereby increasing a possibility that the terminal sets up the RRC connection to the satellite device based on the stored beam broadcast message.

In a possible implementation, the server obtains first information, where the first information includes location information of a terminal that is present when the terminal successfully registers with a satellite network and that is sent by the terminal and that is received over a terrestrial network and a beam broadcast message received by the terminal, or the first information includes location information of a beam center of each beam and a beam broadcast message of each beam that are obtained by the server from a satellite device, or the first information includes the location information of the terminal that is present when the terminal successfully registers with the satellite network and that is sent by the terminal and that is received over the terrestrial network and a beam ID of a beam to which the beam broadcast message received by the terminal belongs, or the first information includes the location information of the beam center of each beam and a beam ID of each beam that are obtained by the server from the satellite device; and the server sends, over the terrestrial network, the first information to a terminal that subscribes to a satellite communication service, where the first information is used by the terminal to set up a radio resource control RRC connection to the satellite device.

According to a third aspect, this application provides a satellite network registration method, applied to a first chip. The method includes: receiving a first beam ID; determining a first beam broadcast message from first information based on the first beam ID, where the first information includes a correspondence between a beam ID and a beam broadcast message, and the first beam broadcast message includes N data frames; receiving X data frames of a second beam broadcast message sent by a satellite device, where X is less than N; and when determining that X data frames of the first beam broadcast message are the same as the X received data frames of the second beam broadcast message, setting up a radio resource control RRC connection to the satellite device based on the first beam broadcast message. In this way, after receiving the first beam ID, the chip searches for the first beam broadcast message based on the first beam ID, and when a part of content of the first beam broadcast message is the same as a part of content of the second beam broadcast message, considers that the first beam broadcast message is the same as the second beam broadcast message, thereby reducing power consumption and time for receiving the complete second beam broadcast message by a terminal.

In a possible implementation, the first information is preset in the first chip before delivery. In this way, the first chip can determine the stored beam broadcast message based on the beam ID, so that the first chip does not need to receive the complete second beam broadcast message.

In a possible implementation, receiving the first beam ID specifically includes: receiving the first beam ID sent by a second chip, where the second chip is configured to determine the first beam ID based on a location of the first information. In this way, the second chip includes a correspondence between location information and the beam ID, and the second chip can determine the first beam ID based on the location, so that the first chip can obtain the beam broadcast message that is more likely to be received at the current location.

In a possible implementation, when successfully registering with a satellite network based on the first beam broadcast message, the first chip sends the first beam ID of the first beam broadcast message to the second chip. In this way, after receiving the first beam ID, the second chip can store a correspondence between the location information and the first beam ID.

According to a fourth aspect, this application provides a satellite network registration method, applied to a first chip. The method includes: obtaining first location information of a first location; determining a first beam broadcast message based on the first location information and first information, where the first information includes a correspondence between location information and a beam broadcast message, and the first beam broadcast message includes N data frames; receiving X data frames of a second beam broadcast message sent by a satellite device, where X is less than N; and when determining that X data frames of the first beam broadcast message are the same as the X received data frames of the second beam broadcast message, setting up a radio resource control RRC connection to the satellite device based on the first beam broadcast message. In this way, the first chip can store a correspondence between the location information and the beam broadcast message used when the first chip successfully registers with the satellite network, so that when the first chip is at the current location or near the current location, the first chip can access the satellite network again based on the previously received beam broadcast message.

In a possible implementation, before obtaining the first location information of the first location, the method further includes: receiving the first beam broadcast message sent by the satellite device; setting up the radio resource control RRC connection to the satellite device based on the first beam broadcast message; and storing a correspondence between second location information and the first beam broadcast message, where a location indicated by the second location information is closest to the first location, or a distance between the first location and the location indicated by the second location information is less than a preset distance threshold.

According to a fifth aspect, this application provides a terminal, including a first processor and a second processor. The first processor is configured to obtain first location information of a first location of the terminal; the first processor is further configured to determine, based on the first location information, a first beam ID from a stored correspondence between location information and a beam ID; the first processor is configured to send the first beam ID to the second processor; the second processor is configured to determine, based on the first beam ID, a first beam broadcast message from a stored correspondence between the beam ID and a beam broadcast message, where the first beam broadcast message includes N data frames; the second processor is further configured to receive X data frames of a second beam broadcast message sent by a satellite device, where X is less than N; and the second processor is further configured to: when determining that X data frames of the first beam broadcast message are the same as the X received data frames of the second beam broadcast message, set up a radio resource control RRC connection to the satellite device based on the first beam broadcast message. In this way, the terminal can determine, via the first processor, the first beam ID corresponding to the current location, and determine, via the second processor, the first beam broadcast message corresponding to the first beam ID. In some application scenarios, power consumption and time required by the second processor to receive the complete second beam broadcast message are reduced.

According to a sixth aspect, this application provides a terminal, including one or more processors, one or more memories, and a transceiver. The transceiver and the one or more memories are coupled to the one or more processors, the one or more memories are configured to store a computer-executable program, and when the one or more processors execute the computer-executable program, the terminal is enabled to perform the method according to any possible implementation of the first aspect.

According to a seventh aspect, this application provides a computer-readable storage medium. The computer-readable storage medium stores a computer program, and when the computer program is run on a processor of a terminal, the terminal is enabled to perform the method according to any possible implementation of the first aspect.

According to an eighth aspect, this application provides a chip, applied to a terminal and including a processing circuit and an interface circuit. The interface circuit is configured to: receive code instructions and transmit the code instructions to the processing circuit, and the processing circuit is configured to run the code instructions to perform the method according to any possible implementation of the first aspect.

### BRIEF DESCRIPTION OF DRAWINGS

FIG. 1 is a diagram of a communication system 10 according to an embodiment of this application;
FIG. 2 is a diagram of a registration procedure of a satellite network according to an embodiment of this application;
FIG. 3 is a diagram of an attach procedure of a satellite network according to an embodiment of this application;
FIG. 4 is a schematic flowchart of a satellite network registration method according to an embodiment of this application;
FIG. 5 is a schematic flowchart of another satellite network registration method according to an embodiment of this application; and
FIG. 6 is a diagram of a hardware structure of a terminal 100 according to an embodiment of this application.

### DESCRIPTION OF EMBODIMENTS

The following clearly describes technical solutions in embodiments of this application in detail with reference to accompanying drawings. In descriptions of embodiments of this application, unless otherwise specified, "/" means "or". For example, A/B may indicate A or B. In this specification, "and/or" is merely an association relationship for describing associated objects, and indicates that three relationships may exist. For example, A and/or B may indicate the following three cases: Only A exists, both A and B exist, and only B exists. In addition, in the descriptions of embodiments of this application, "a plurality of" means two or more.

Terms "first" and "second" below are merely intended for description, and shall not be understood as an indication or implication of relative importance or implicit indication of a quantity of indicated technical features. Therefore, a feature limited by "first" and "second" may explicitly or implicitly include one or more features. In the descriptions of embodiments of this application, unless otherwise specified, "a plurality of" means two or more.

The following first describes a communication system 10 according to an embodiment of this application.

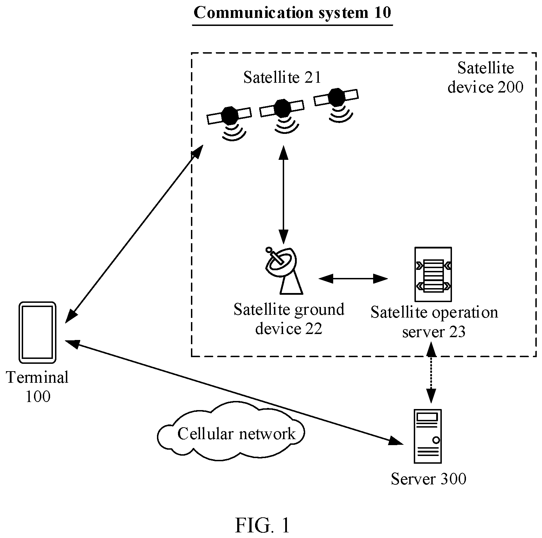

For example, as shown in FIG. 1, the communication system 10 may include but is not limited to a terminal 100, a satellite device 200, and the like. When the terminal 100 is in a satellite network, the terminal 100 may implement a satellite communication function via the satellite device 200. In embodiments of this application, the satellite network is also referred to as a non-terrestrial network (non-terrestrial network, NTN). The terminal 100 may send a satellite message to another terminal via the satellite device 200. The satellite device 200 may receive the satellite message sent by the terminal 100. If the another terminal is located in a terrestrial network (terrestrial network, TN), after receiving the satellite message, the satellite device 200 may send the satellite message to the another terminal in the terrestrial network via a terrestrial network device. If the another terminal is located in the satellite network, after receiving the satellite message, the satellite device 200 may deliver the satellite message to the another terminal in the satellite network. Similarly, the satellite device 200 may further receive a satellite message sent by the another terminal to the terminal 100, and send the satellite message to the terminal 100 in the satellite network. The terrestrial network may include but is not limited to a cellular network, a wireless local area network, and the like.

The satellite device 200 may include but is not limited to a satellite 21, a satellite ground device 22, a satellite operation server 23, and the like. The satellite 21 may be configured to relay and forward a satellite message, and the satellite 21 may forward, to the satellite ground device 22, a satellite message sent by a terminal (for example, the terminal 100) in the satellite network. The satellite 21 may further relay and forward, to the terminal in the satellite network, a message sent by the satellite ground device 22. The satellite ground device 22 may include one or more devices that have a sending function and one or more devices that have a receiving function, or may include one or more devices that have a sending function and a receiving function. This is not limited herein. The satellite ground device 22 may further include one or more devices that have a data processing function of a satellite communication protocol stack, and may be configured to encapsulate or parse a satellite message based on the satellite protocol stack. The satellite operation server 23 may be configured to provide a satellite communication service for the terminal. The satellite operation server 23 may be configured to provide a system message including data such as a beam center location, a frequency, and a public land mobile network (public land mobile network, PLMN).

When the terminal 100 sends a satellite message to a terminal 400 (not shown in the figure) in the terrestrial network, the terminal 100 may first send the satellite message to the satellite 21. The satellite 21 performs replay only, to forward, to the satellite ground device 22 on the ground, the satellite message sent by the terminal 100. The satellite ground device 22 may send the satellite message to the satellite operation server 23. The satellite operation server 23 may parse the satellite message from the terminal 100, and forward content in the satellite message to the terminal 400 over the terrestrial network. Similarly, when the terminal 400 in the terrestrial network sends a satellite message to the terminal 100 in the satellite network, the terminal 400 may first send the satellite message to the satellite operation server 23 over a cellular communication network. The satellite operation server 23 may store the satellite message from the terminal 400. After detecting that the terminal 100 accesses the satellite network, the satellite operation server 23 may send the satellite message to the terminal 100 in the satellite network via the satellite ground device 22 and the satellite 21.

The terminal 100 may alternatively send a satellite message to a terminal 500 (not shown in the figure) in the satellite network. The terminal 100 may forward, via the satellite 21 and the satellite ground device 22, the satellite message sent by the terminal 100 to the satellite operation server 23 on the ground. The satellite operation server 23 may store the satellite message from the terminal 100. After detecting that the terminal 500 accesses the satellite network, the satellite operation server 23 may send the satellite message from the terminal 100 to the terminal 500 in the satellite network via the satellite ground device 22 and the satellite 21. Similarly, the terminal 500 in the satellite network may also send a satellite message to the terminal 100 in the satellite network.

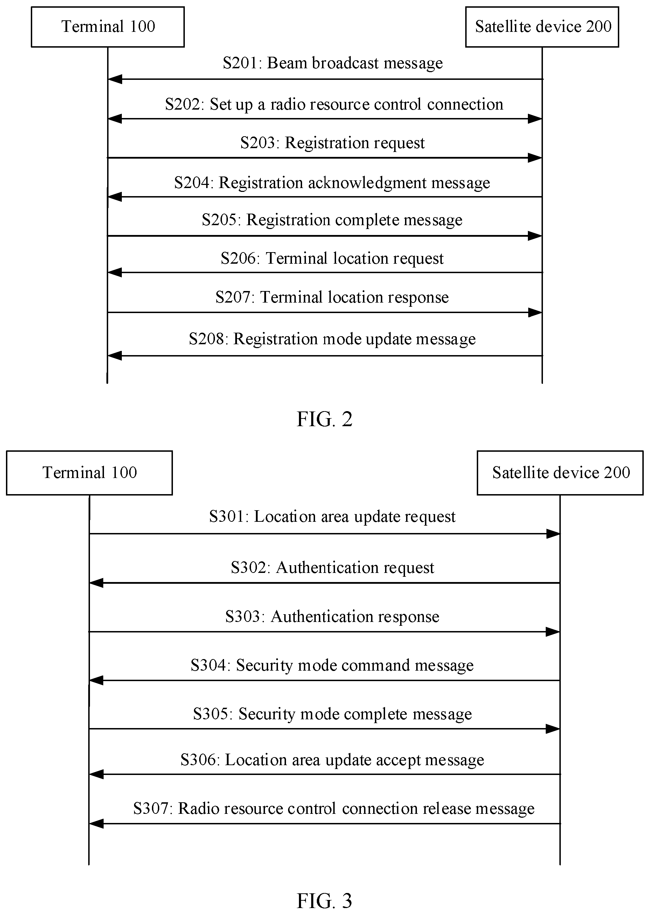

In this embodiment of this application, the terminal 100 needs to perform a registration procedure and an attach procedure, to access the satellite network. After accessing the satellite network, the terminal 100 may implement the satellite communication function via the satellite device 200. For a procedure in which the terminal 100 registers with the satellite network, refer to an embodiment shown in FIG. 2. For a procedure in which the terminal 100 attaches to the satellite network, refer to an embodiment shown in FIG. 3. It should be noted that, when accessing the satellite device 200, the terminal 100 first needs to receive a beam broadcast message sent by the satellite device 200. The beam broadcast message may indicate information such as a channel accessed by the terminal 100, a frequency, and a time sequence. The terminal 100 may initiate a random access procedure to the satellite device 200 based on the beam broadcast message, and set up a radio resource control (radio resource control, RRC) RRC connection. After the terminal 100 sets up the RRC connection to the satellite device 200, the terminal 100 may perform operations of registering with and attaching to the satellite device 200.

Transmission protocols of the satellite network include an access stratum (access stratum, AS) protocol and a non-access stratum (non-access stratum, NAS) protocol. In the communication system 10, the terminal 100 may communicate with the satellite operation server 23 by using the NAS protocol, the terminal 100 may communicate with the satellite 21 and the satellite ground device 22 by using the AS protocol, and the satellite operation server 23 may also communicate with the satellite ground device 22 by using the AS protocol. The AS protocol layer may include a physical (physical, PHY) layer, a medium access control (medium access control, MAC) layer, a radio link control (radio link control, RLC) layer, a packet data convergence protocol (packet data convergence protocol, PDCP) layer, and a radio resource control (radio resource control, RRC) layer. The satellite 21 and the satellite ground device 22 may be referred to as access stratum devices, and the satellite operation server 23 may be referred to as a non-access stratum device.

In some examples, the communication system 10 further includes a server 300. The server 300 may send preconfigured broadcast information to a specified terminal over the terrestrial network. The specified terminal may be a terminal that subscribes to the satellite communication service on the satellite operation server 23. The preconfigured broadcast information may include a correspondence between a beam broadcast message and location information, and the location information indicates a geographical location at which the beam broadcast message is received. The server 300 may send the preconfigured broadcast information to a specified terminal in the terrestrial network at an interval of preset duration (for example, two hours), and/or the server 300 may send updated preconfigured broadcast information to the specified terminal in the terrestrial network after updating the stored preconfigured broadcast information. In some examples, after updating the stored preconfigured broadcast information, the server 300 may send updated partial data to a terminal that subscribes to the satellite communication service, and send an identifier of invalid data to the terminal. In this way, communication resources between the server 300 and the terminal can be saved.

In some examples, the server 300 may obtain the preconfigured broadcast information based on beam broadcast messages obtained from terminals through crowdsourcing. Specifically, after the terminal successfully attached to the satellite device 200 returns to the terrestrial network, the terminal may send, to the server 300, a beam broadcast message received in the satellite network and location information of a location at which the terminal is located when the beam broadcast message is received. The server 300 may store a correspondence that is between a beam broadcast message and location information and that is sent by each terminal, to obtain the preconfigured broadcast information. For example, the server 300 may obtain, at an interval of preset duration (for example, 10 minutes), historical camping information from the terminal that is in the terrestrial network and that subscribes to the satellite communication service. Alternatively, the terminal that subscribes to the satellite communication service may send the historical camping information to the server 300 when switching from the satellite network to the terrestrial network.

In some examples, the server 300 may store only recently received M beam broadcast messages and corresponding location information, where M is greater than 1. Alternatively, the server 300 may store a beam broadcast message and corresponding location information within preset duration (for example, one day). In this way, the satellite network side updates a beam system message. The server 300 may provide, in the terrestrial network, the terminal with a latest beam broadcast message. When accessing the satellite network, the terminal may perform the random access procedure based on the latest beam broadcast message.

In some examples, to enable the terminal in the satellite network to perform the random access procedure at any location based on the preconfigured broadcast information, the server 300 may store at least one beam broadcast message in each beam of each satellite.

In some examples, the server 300 may further obtain the preconfigured broadcast information from the satellite device 200. The server 300 may obtain a beam broadcast message and a coverage area of the beam broadcast message from the satellite device 200 at an interval of preset duration (for example, 30 minutes). Alternatively, after updating a beam broadcast message, the satellite device 200 may send an updated beam broadcast message and a coverage area of the beam broadcast message to the server 300. This is not limited in embodiments of this application.

The following describes a diagram of a registration procedure of a satellite network according to an embodiment of this application.

For example, as shown in FIG. 2, a terminal 100 may obtain a dedicated signaling link from a satellite device 200 through a registration process, so that the terminal 100 can send non-access stratum data to the satellite device 200. The registration procedure includes the following steps.

S201: The satellite device 200 sends a beam broadcast message through broadcast.

S202: The terminal 100 sets up a radio resource control connection to the satellite device 200.

The satellite device 200 may send the beam broadcast message through broadcast. The beam broadcast message is used to notify the terminal 100 of information, such as a channel, a frequency, and a time sequence, that is provided by the satellite network.

After being powered on, the terminal 100 may be tuned to a global beam common channel, and receive the public broadcast message sent by the satellite device 200. The terminal 100 may obtain, from the public broadcast message, a beam range of each beam and a channel corresponding to each beam that are provided by the satellite device 200. The terminal 100 may further obtain location information. For example, the terminal 100 may obtain the location information by using a global navigation satellite system (global navigation satellite system, GNSS).

The terminal 100 may determine, based on the beam range of each beam and the location information of the terminal 100, a specified beam corresponding to the location of the terminal 100. The terminal 100 may receive a beam broadcast message carried in the specified beam. The beam broadcast message may indicate the information such as the channel accessed by the terminal 100, the frequency, and the time sequence. The terminal 100 may adjust the frequency to a frequency range of a random access channel corresponding to the specified beam, and initiate a random access procedure. After the terminal 100 performs the random access process, uplink synchronization between the terminal 100 and the satellite device 200 is implemented, and the terminal 100 may send data to the satellite device 200 based on the time sequence indicated by the satellite device 200.

The terminal 100 may send a radio resource control connection request (RRC Connection Request) to the satellite device 200, where the message is used to obtain an RRC link resource. After receiving the message, the satellite device 200 may send a radio resource control setup (RRC Setup) message to the terminal 100. After receiving the radio resource control setup message, the terminal 100 sets up the RRC connection to the satellite device 200.

S203: The terminal 100 sends a registration request to the satellite device 200.

After successfully setting up the RRC connection, the terminal 100 may send the registration request to the satellite device 200 through the RRC connection. The registration request may include information such as an identity (identity, ID), a priority, and a setup cause of the terminal 100.

S204: The satellite device 200 sends a registration acknowledgment message to the terminal 100.

After receiving the registration request sent by the terminal 100, the satellite device 200 may allocate a temporary mobile subscriber identity to the terminal 100. The satellite device 200 may send the registration acknowledgment message to the terminal 100, where the registration acknowledgment message includes the temporary mobile subscriber identity.

S205: The terminal 100 sends a registration complete message to the satellite device 200.

After receiving the registration acknowledgment message sent by the satellite device 200, the terminal 100 may send the registration complete message to the satellite device 200. The registration complete message may be used to notify the satellite device 200 that the terminal 100 successfully registers with the satellite network.

S206: The satellite device 200 sends a terminal location request to the terminal 100.

After receiving the registration complete message, the satellite device 200 may send the terminal location request to the terminal 100, to obtain location information of the terminal 100.

S207: The terminal 100 sends a terminal location response to the satellite device 200.

After receiving the terminal location request sent by the satellite device 200, the terminal 100 may encapsulate the location information of the terminal 100 to obtain the terminal location response. The terminal 100 may send the terminal location response to the satellite device 200.

S208: The satellite device 200 sends a registration mode update message to the terminal 100.

After receiving the location information of the terminal 100, the satellite device 200 may send the registration mode update message to the terminal 100. The registration mode update message may be used to notify the terminal 100 that a network registration procedure is completed and the terminal 100 successfully registers with the satellite network.

In this way, the terminal 100 and the satellite device 200 set up a signaling exchange link through the registration procedure shown in FIG. 2. The terminal 100 and the satellite device 200 may transmit a NAS message through the link. However, because a distance between the terminal 100 and the satellite device 200 is long, a bandwidth used by the satellite device 200 to send the beam broadcast message is narrow, and it takes a large amount of time for the terminal 100 to receive the beam broadcast message. Usually, it takes about eight seconds for the terminal 100 to receive the beam broadcast message sent by the satellite device 200.

The following describes a diagram of an attach procedure of a satellite network according to an embodiment of this application.

For example, as shown in FIG. 3, after completing a registration procedure, a terminal 100 may perform the attach procedure to register with a core network of the satellite network. After the terminal 100 successfully registers with the core network of the satellite network, the terminal 100 may receive paging information, set up a calling connection, and the like in the satellite network. The attach procedure in which the terminal 100 registers with the core network of the satellite network includes the following steps.

S301: The terminal 100 sends a location area update request to a satellite device 200.

The terminal 100 may send the location area update request to the satellite device 200, where the request may include an identity of the terminal and international mobile subscriber identity (international mobile subscriber identity, IMSI) attach request information. The IMSI attach request information may be used by the terminal 100 to request the satellite device 200 to allocate a temporary mobile subscriber identity (temporary mobile subscriber identity, TMSI) and a location area code to the terminal 100. It should be noted that the terminal 100 may send the information to the satellite device 200 when the terminal 100 is powered on or returns to a satellite signal coverage area or a SIM card is re-inserted into the terminal 100.

S302: The satellite device 200 sends an authentication request to the terminal 100.

After receiving the location area update request, the satellite device 200 may send the authentication request to the terminal 100, where the request carries an authentication parameter. The authentication parameter may include but is not limited to a random number (random, RAND), an authentication token (authentication token, AUTN), and the like that are generated by the satellite device 200 via a random number generator.

S303: The terminal 100 sends an authentication response to the satellite device 200.

After receiving the authentication request sent by the satellite device 200, the terminal 100 may obtain a response (response, RES) of the terminal 100 through calculation based on the RAND and the AUTN in the authentication parameter. The terminal 100 may send the authentication response to the satellite device 200, where the authentication response includes the RES.

S304: The satellite device 200 sends a security mode command message to the terminal 100.

After receiving the RES of the terminal 100, the satellite device 200 performs authentication on the terminal 100 based on the RES. After the authentication succeeds, the satellite device 200 may send the security mode command message to the terminal 100, where the message may include information such as an encryption algorithm and an integrity protection algorithm. The message may indicate the terminal 100 to start integrity protection and data encryption.

S305: The terminal 100 sends a security mode complete message to the satellite device 200.

The terminal 100 may determine the integrity protection algorithm and the encryption algorithm based on the security mode command message. The terminal 100 may encrypt a NAS message based on the integrity protection algorithm and the encryption algorithm. The terminal 100 may further send the security mode complete message to the satellite device 200, to indicate that the terminal 100 completes security mode configuration, and that setting of an encryption mode and an integrity protection mode is complete.

Optionally, the satellite device 200 may send an identity request to the terminal 100. The identity request is used to obtain the identity of the terminal 100, and the identity may be used by the satellite device 200 to confirm validity of the terminal 100. For example, the identity of the terminal 100 may be an international mobile station equipment identity and software version number (international mobile equipment identity software version, IMEISV). After receiving the identity request, the terminal 100 may send, to the satellite device 200, an identity response that carries the identity of the terminal 100. In this way, the satellite device 200 may re-confirm the identity of the terminal 100 based on the identity of the terminal 100.

S306: The satellite device 200 sends a location area update accept message to the terminal 100.

After receiving the security mode complete message, the satellite device 200 may allocate the TMSI and the location area code to the terminal 100. The satellite device 200 may send the location area update accept message to the terminal 100, to notify the terminal 100 that IMSI attachment succeeds.

S307: The satellite device 200 sends a radio resource control connection release message to the terminal 100.

The satellite device 200 may send the radio resource control connection release message to the terminal 100 after the attach procedure of the terminal 100 ends. After receiving the radio resource control connection release message, the terminal 100 may return to an idle mode, and wait for a service request or paging.

In this way, the terminal 100 sets up a communication connection to the core network of the satellite network through the attach procedure, and the terminal 100 may perform service data transmission with the satellite device 200 through the communication connection.

Embodiments of this application provide a satellite network registration method. A terminal 100 receives, in a terrestrial network, preconfigured broadcast information sent by a server 300, where the preconfigured broadcast information includes one or more broadcast information items, and the broadcast information item includes a correspondence between location information and a beam broadcast message. The terminal 100 may determine, based on location information of a current location of the terminal 100, a specified broadcast information item corresponding to the location information of the terminal 100. The terminal 100 may set up an RRC connection to a satellite device 200 based on a beam broadcast message in the specified broadcast information item. In this way, the terminal 100 can more quickly obtain, based on the location of the terminal 100 and the preconfigured broadcast information, the beam broadcast message that can be received at the location of the terminal 100. The terminal 100 may set up the RRC connection to the satellite device 200 based on the beam broadcast message, so that the terminal 100 may not need to receive a beam broadcast message sent by the satellite device 200. This reduces time for obtaining the beam broadcast message by the terminal 100, helps the terminal 100 access a satellite network more quickly, and improves communication efficiency.

The terminal 100 may store the preconfigured broadcast information after receiving the preconfigured broadcast information sent by the server 300. When accessing the satellite network, the terminal 100 may use, as a broadcast information item corresponding to the location information of the terminal 100, a specified broadcast information item corresponding to a location point closest to the terminal 100. The terminal 100 may calculate a distance difference between a location indicated by location information in the broadcast information item and the location of the terminal 100, and determine a specified broadcast information item with a minimum distance difference. The terminal 100 may set up the RRC connection to the satellite device 200 based on a beam broadcast message in the specified broadcast information item. It may be understood that, if the terminal 100 fails to set up the RRC connection to the satellite device 200 based on the beam broadcast message in the specified broadcast information item, the terminal 100 may receive the beam broadcast message sent by the satellite device 200, and set up the RRC connection to the satellite device 200 based on the received beam broadcast message.

In some examples, when sending the beam broadcast message, the satellite device 200 may divide the beam broadcast message into N data frames, and repeatedly send the N data frames on a broadcast channel. In this embodiment of this application, the beam broadcast message sent by the satellite device 200 may be referred to as a downlink beam broadcast message. The terminal 100 may receive the first X data frames of the downlink beam broadcast message sent by the satellite device 200, where X is a positive integer. The terminal 100 may compare the first X received data frames of the downlink beam broadcast message with the first X data frames of the specified beam broadcast message in the specified broadcast information item. When determining that the first X data frames of the downlink beam broadcast message are the same as the first X data frames of the specified beam broadcast message, the terminal 100 may initiate a random access procedure based on the specified beam broadcast message. When determining that the first X data frames of the downlink beam broadcast message are different from the first X data frames of the specified beam broadcast message, the terminal 100 may continue to receive the downlink beam broadcast message sent by the satellite device 200, and perform the random access procedure based on the downlink beam broadcast message. In this way, the terminal 100 may receive a part of the downlink beam broadcast message, and determine, based on the received part of the downlink beam broadcast message, whether the stored specified beam broadcast message is the same as the downlink beam broadcast message sent by the satellite device 200. When determining that the stored specified beam broadcast message is different from the downlink beam broadcast message sent by the satellite device 200, the terminal 100 may receive, in time, the downlink beam broadcast message sent by the satellite device 200, to avoid a scenario in which the random access procedure is performed based on the stored incorrect beam broadcast message.

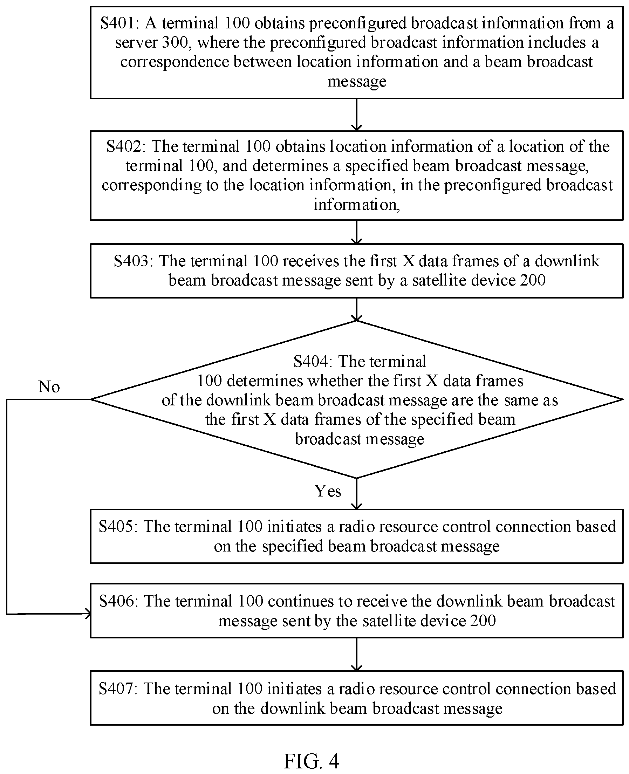

For example, as shown in FIG. 4, a satellite network registration method includes the following steps.

S401: A terminal 100 obtains preconfigured broadcast information from a server 300, where the preconfigured broadcast information includes a correspondence between location information and a beam broadcast message.

The preconfigured broadcast information includes one or more broadcast information items. The broadcast information item may include the correspondence between the location information and the beam broadcast message. The one or more broadcast information items include a specified broadcast information item. The terminal 100 may obtain the preconfigured broadcast information of a satellite network from the server 300 over a terrestrial network, for example, a cellular network or a wireless fidelity (wireless fidelity, Wi-Fi) network.

The location information of the broadcast information item may include but is not limited to one or more of location information indicating location coordinates, location information indicating a beam center location, location information indicating an area, and the like. The location information indicating the location coordinates may be location information of a location at which a terminal in the satellite network receives a beam broadcast message. For details, refer to the embodiment shown in step S402.

After the terminal 100 obtains the preconfigured broadcast information provided by the server 300, after the terminal 100 is disconnected from the terrestrial network, the terminal 100 may set up a radio resource control connection to a satellite device 200 based on the preconfigured broadcast information. For details, refer to step S402 to step S407.

S402: The terminal 100 obtains location information of a location of the terminal 100, and determines a specified beam broadcast message, corresponding to the location information, in the preconfigured broadcast information.

The terminal 100 may obtain the location information of the terminal 100 by using a GNSS.

In some examples, the location information of the broadcast information item may indicate the location coordinates of receiving the beam broadcast message in the broadcast information item, where the location coordinates may be location coordinates of receiving, by each terminal in the satellite network, the beam broadcast message in the broadcast information item, or location coordinates of a beam center of a satellite beam that carries the beam broadcast message in the broadcast information item. For example, the location information may be longitude and latitude of the location coordinates. The terminal 100 may calculate distances between location coordinates of the terminal 100 and location coordinates indicated by location information of all the broadcast information items in the preconfigured broadcast information, and obtain, through screening, a specified broadcast information item corresponding to location coordinates that are indicated by location information and that are closest to the location coordinates of the terminal 100. The specified broadcast information item includes the specified beam broadcast message.

The server 300 may obtain location information of each terminal corresponding to a case in which the terminal receives the beam broadcast message and content of the received beam broadcast message. Optionally, each terminal may determine, based on the received beam broadcast message, a satellite identifier (identifier, ID) and a beam ID that carry the beam broadcast message, and determine a broadcast range of the beam broadcast message, namely, a beam range, based on the satellite ID and the beam ID. A coverage area of a beam may be determined by a beam center location and a beam radius. Each terminal may send, to the server 300, a beam center location of a beam that covers a location of the terminal; and/or each terminal may send the beam broadcast message to the server 300, and the server 300 may obtain, through parsing, the satellite ID and the beam ID in the beam broadcast message, and determine the beam center location of the beam indicated by the satellite ID and the beam ID; and/or the server 300 may obtain broadcast ranges of beam broadcast messages of all beams and content of the beam broadcast messages from the satellite device 200. In some examples, beam IDs of all the beams of the satellite device 200 are different, and the terminal and the server 300 may determine the beam center location based on only the beam ID.

In some examples, the terminal 100 may set a preset distance threshold. When detecting that a distance between the location of the terminal 100 and a location indicated by location information in a broadcast information item is less than or equal to the preset distance threshold, the terminal 100 may use the broadcast information item as the specified broadcast information item, to obtain the specified beam broadcast message. When detecting that distances between the location of the terminal 100 and locations indicated by location information in all the broadcast information items are greater than the preset distance threshold, the terminal 100 may receive a downlink beam broadcast message sent by the satellite device 200. In this case, the distances between the location of the terminal 100 and the locations indicated by the location information in all the broadcast information items in the preconfigured broadcast information are long, there is a high probability that the downlink beam broadcast message received at the location of the terminal 100 is different from the beam broadcast message in the broadcast information item, and the terminal 100 may not use the stored beam broadcast message, but directly receive the downlink beam broadcast message sent by the satellite device 200, to reduce access time.

In some examples, the preset distance threshold set by the terminal 100 is less than or equal to beam radiuses of all the beams in the satellite network. When determining that the distance between the terminal 100 and the location indicated by the location information in the broadcast information item is less than or equal to the preset distance threshold, the terminal 100 determines that the terminal 100 is in the broadcast range of the beam broadcast message in the broadcast information item, and the terminal 100 may perform step S403. When determining that the distance between the terminal 100 and the location indicated by the location information in the broadcast information item is greater than the preset distance threshold, the terminal 100 determines that the terminal 100 is not in the broadcast range of the beam broadcast message in the broadcast information item, and the terminal 100 may perform step S406. In this way, it can be ensured as much as possible that the terminal 100 can obtain the beam broadcast message within a beam range to which the current location belongs.

In some other examples, when the location information in the preconfigured beam information includes the location information indicating the location coordinates at which each terminal receives the beam broadcast message, the preset distance threshold set by the terminal 100 is less than or equal to beam diameters of all the beams in the satellite network. In this way, when the location information in the preconfigured beam information corresponds to a location near an edge on one side of a beam range, and the terminal 100 is near an edge on the other side of the beam range, the terminal 100 may also perform step S403 based on the stored beam broadcast message.

In some examples, after obtaining the location information and the beam broadcast message, the server 300 may obtain the beam ID of the beam from the beam broadcast message. The server 300 may store a most recently received beam broadcast message in a plurality of beam broadcast messages with a same beam ID. The server 300 may store all location information corresponding to the beam broadcast messages with the same beam ID. Alternatively, the server 300 may store location information corresponding to P (for example, five) most recently received beam broadcast messages in the beam broadcast messages with the same beam ID. Alternatively, when determining that corresponding location information in the plurality of beam broadcast messages with the same beam ID includes beam center location information, the server 300 may store only the beam center location information.

In some other examples, the location information of the broadcast information item may indicate an area location for receiving the beam broadcast message in the broadcast information item. The server 300 may perform area division by city, or the server 300 may perform area division based on coverage areas of different beams. After receiving the location information indicating the location of the terminal and the beam broadcast message that are reported by the terminal (for example, the terminal 100), the server 300 may determine an area to which the location indicated by the location information reported by the terminal belongs, and store a correspondence between the location information indicating the area and the beam broadcast message. Alternatively, after receiving the location information indicating the area of the terminal and the beam broadcast message that are reported by the terminal (for example, the terminal 100), the server 300 may store a correspondence between the location information indicating the area location and the beam broadcast message. Optionally, after receiving the area information and the corresponding beam broadcast message that are sent by the terminal, the server 300 may further determine that the received area information is the same as the stored area information, and the server 300 may update the stored beam broadcast message to the beam broadcast message that is received more recently. Optionally, the server 300 may update, based on a beam ID of the received beam broadcast message, the stored beam broadcast message to a beam broadcast message that has a same beam ID as that of the beam broadcast message that is received more recently. In this way, the terminal 100 can determine, based on the location information of the terminal 100, the area in which the terminal 100 is located. The terminal 100 may determine, based on the area in which the terminal 100 is located and the preconfigured broadcast information, the specified beam broadcast message corresponding to the area in which the terminal 100 is located.

It should be noted that, in some examples, beam IDs of different beams of different satellites in the satellite device 200 may be the same. To distinguish between beam broadcast messages carried by different beams, the server 300 may determine, based on both the satellite ID and the beam ID, a beam to which a beam broadcast message belongs. When the server 300 determines that satellite IDs and beam IDs of two received beam broadcast messages are the same, the server 300 may store a beam broadcast message that is received more recently. When the server 300 determines that the satellite IDs or the beam IDs of the two received beam broadcast messages are different, the server 300 may store the two beam broadcast messages. In this way, it can be ensured that the server 300 stores beam broadcast messages of different beams.

S403: The terminal 100 receives the first X data frames of the downlink beam broadcast message sent by the satellite device 200.

The satellite device 200 may send the downlink beam broadcast message through broadcast on a broadcast channel, for example, a broadcast control channel (broadcast control channel, BCCH). The downlink beam broadcast message includes N data frames, and the satellite device 200 may repeatedly send the N data frames on the broadcast channel. The terminal 100 may receive the first X data frames of the downlink beam broadcast message sent by the satellite device 200, where X is less than N. It should be noted that, without being limited to the step sequence shown in FIG. 4, the terminal 100 may simultaneously perform step S402 and step S403. This is not limited in embodiments of this application.

S404: The terminal 100 determines whether the first X data frames of the downlink beam broadcast message are the same as the first X data frames of the specified beam broadcast message.

After determining the specified beam broadcast message of the specified broadcast information item based on the location information of the terminal 100, the terminal 100 may determine whether the first X received data frames of the downlink beam broadcast message are the same as the first X data frames of the specified beam broadcast message. When determining that the first X data frames of the downlink beam broadcast message are the same as the first X data frames of the specified beam broadcast message, the terminal 100 may perform step S405. When determining that the first X data frames of the downlink beam broadcast message are different from the first X data frames of the specified beam broadcast message, the terminal 100 may perform step S406.

In some examples, in a process of receiving the beam broadcast message sent by the satellite device 200, the terminal 100 may determine whether the received downlink beam broadcast message is the same as the specified beam broadcast message. When receiving a Y^{th} data frame of the downlink beam broadcast message sent by the satellite device 200, and determining that the Y^{th} data frame of the downlink beam broadcast message is different from a Y^{th} data frame of the specified beam broadcast message, the terminal 100 may receive the complete downlink beam broadcast message sent by the satellite device 200, and perform step S407, where Y is less than or equal to X. When receiving an X^{th} data frame of the downlink beam broadcast message sent by the satellite device 200, and determining that the X^{th} data frame of the downlink beam broadcast message is the same as an X^{th} data frame of the specified beam broadcast message, the terminal 100 may perform step S405. In this way, if the terminal 100 determines that the received downlink beam broadcast message is different from the specified beam broadcast message before receiving the first X data frames of the downlink beam broadcast message, determining times by the terminal 100 are reduced, and time for receiving the downlink beam broadcast message by the terminal 100 is not prolonged by performing a determining operation.

In some examples, the terminal 100 may obtain, from the preconfigured broadcast information through screening based on the location information of the terminal 100, M broadcast information items whose location indicated by location information is closest to the location of the terminal 100, where M is a positive integer. The terminal 100 may determine whether the first X data frames of the downlink beam broadcast message sent by the satellite device 200 are the same as the first X data frames of a beam broadcast message in the M broadcast information items. The terminal 100 may perform step S405 based on any beam broadcast message that is in the M broadcast information items and that is the same as the first X data frames of the downlink beam broadcast message sent by the satellite device 200. In this way, in some scenarios, when the terminal 100 is in a beam range of a specified beam, a beam broadcast message that is in the broadcast information item and whose location indicated by location information is closest to the location of the terminal 100 may belong to a beam adjacent to the specified beam. Therefore, the terminal 100 compares the M broadcast information items, to reduce, as much as possible, a probability that the terminal 100 receives the downlink beam broadcast message sent by the satellite device 200.

Optionally, the terminal 100 stores satellite ephemeris information. The terminal 100 may determine satellite IDs of one or more specified satellites based on the location information of the terminal 100 and the satellite ephemeris information. The specified satellite is a satellite to which the beam whose beam range covers the location of the terminal 100 belongs. When determining that the first X frames of the specified beam broadcast message are the same as the first X frames of the downlink beam broadcast message, the terminal 100 may obtain, through parsing, the satellite ID in the specified beam broadcast message, and may perform step S405 when determining that the satellite ID of the specified beam broadcast message is the same as a satellite ID of any one of the one or more specified satellites. When determining that the satellite ID of the specified beam broadcast message is different from the satellite IDs of all the one or more specified satellites, the terminal 100 may perform step S406. In this way, the terminal 100 may re-determine, based on the satellite ephemeris information, whether the stored specified beam broadcast message is the same as the beam broadcast message sent by the specified satellite, to reduce a probability that the terminal 100 initiates the RRC connection based on an incorrect beam broadcast message.

S405: The terminal 100 initiates the radio resource control connection based on the specified beam broadcast message.

When determining that the first X received data frames of the downlink beam broadcast message are the same as the first X data frames of the specified beam broadcast message, the terminal 100 may perform a random access procedure based on the specified beam broadcast message, to set up the RRC connection to the satellite device 200. For details, refer to the embodiment shown in FIG. 2. Details are not described herein again.

S406: The terminal 100 continues to receive the downlink beam broadcast message sent by the satellite device 200.

When determining that the first X received data frames of the downlink beam broadcast message are different from the first X data frames of the specified beam broadcast message, the terminal 100 may accordingly determine that content of the specified beam broadcast message is different from content of the downlink beam broadcast message sent by the satellite device 200, and the terminal 100 cannot initiate the random access procedure to the satellite device 200 based on the specified beam broadcast message. The terminal 100 may continue to receive the downlink beam broadcast message sent by the satellite device 200, and perform step S407 after receiving the complete beam broadcast message sent by the satellite device 200.

S407: The terminal 100 initiates the radio resource control connection based on the downlink beam broadcast message.

After receiving the downlink beam broadcast message sent by the satellite device 200, the terminal 100 may initiate the random access procedure to the satellite device 200 based on the downlink beam broadcast message, to set up the RRC connection to the satellite device 200. For details, refer to the embodiment shown in FIG. 2. Details are not described herein again.

In this way, the terminal 100 initiates a wireless access procedure based on the stored beam broadcast message, so that the time for the terminal 100 to receive the downlink beam broadcast message in the satellite network is reduced, the terminal 100 can register with the satellite device 200 more quickly, and a user can initiate a satellite communication service more quickly by using the terminal 100.

In a possible implementation, the preconfigured beam information is preconfigured in the terminal 100. For example, a satellite chip, a memory, or an application processor of the terminal 100 stores the preconfigured beam information. The terminal 100 may determine the specified beam broadcast message from the preconfigured beam information based on the location information. For details, refer to the foregoing embodiments. Details are not described herein again. In this way, the preconfigured beam information may be preconfigured in the terminal 100 before delivery, and the terminal 100 does not need to obtain the preconfigured beam information from the server 300.

In some examples, when sending the downlink beam broadcast message, the satellite device 200 may send different data frames of the downlink beam broadcast message at different time intervals. For example, the satellite device 200 may send a 1^{st} data frame in the N data frames of the downlink beam broadcast message at an interval of i data frames, the satellite device 200 may send a 2^{nd} data frame in the N data frames of the downlink beam broadcast message at an interval of j data frames, and the rest may be deduced by analogy, where i and j may be different.

In addition, a time point at which the terminal 100 receives the downlink beam broadcast message is uncertain, and the terminal 100 may start to receive the X data frames of the downlink beam broadcast message when the satellite device 200 sends any one of the N data frames. Therefore, when the terminal 100 receives the downlink beam broadcast message, the first X data frames received by the terminal 100 are not necessarily the 1^{st} data frame to the X^{th} data frame in the N data frames of the downlink beam broadcast message.

When receiving the data frame of the downlink beam broadcast message, the terminal 100 may compare N data frames of the stored specified beam broadcast message with the received data frame of the downlink beam broadcast message. When determining, through comparison, that the received data frame is the same as one of the N stored data frames, the terminal 100 continues to compare a next received data frame with the N stored data frames. The rest may be deduced by analogy. When determining, through comparison, that all the X received data frames of the downlink beam broadcast message are the same as one of the stored N data frames, the terminal 100 determines that the first X received data frames of the downlink beam broadcast message are the same as the X data frames of the specified beam broadcast message. In this way, the terminal 100 can determine, as soon as possible, whether each of the first X received data frames is the same as one of the stored data frames. When there are data frames that are the same as the X received data frames in the stored data frames, the X data frames of the downlink beam broadcast message are the same as the X data frames of the specified beam broadcast message, and there is a high probability that the downlink beam broadcast message is the same as the specified beam broadcast message. The terminal 100 may directly initiate the radio resource control connection based on the stored specified beam broadcast message, to reduce time overheads for receiving the downlink beam broadcast message.

When the terminal 100 determines, through comparison, that the Y^{th} received data frame is different from all of the N data frames of the stored specified beam broadcast message, the terminal 100 determines that the downlink beam broadcast message is different from the specified beam broadcast message, and the terminal 100 continues to receive the data frame of the downlink beam broadcast message, where Y is less than or equal to X. After receiving all data frames of the downlink beam broadcast message, the terminal 100 initiates the radio resource control connection based on the downlink beam broadcast message. In this way, when receiving the Y^{th} data frame of the downlink beam broadcast message, the terminal 100 determines that the data frame is different from the stored specified beam broadcast message, the terminal 100 may accordingly determine that the downlink beam broadcast message is different from the specified beam broadcast message, and the terminal 100 continues to receive a remaining data frame of the downlink beam broadcast message.

For example, the downlink beam broadcast message of the satellite device 200 includes three data frames: a data frame 1, a data frame 2, and a data frame 3. A sequence in which the terminal 100 receives the three data frames may be the data frame 2, the data frame 1, and the data frame 3. If X is 2, when receiving the data frame 2, the terminal 100 may compare the data frame 2 with three data frames of the stored specified beam broadcast message one by one. When determining that the received data frame 2 is the same as the stored data frame 2, the terminal 100 may continue to compare whether the received data frame 1 is the same as the three stored data frames. When determining that the received data frame 1 is the same as the stored data frame 1, the terminal 100 initiates the radio resource control connection based on the stored specified beam broadcast message.

When determining that the received data frame 2 is different from the three stored data frames, or when determining that the received data frame 2 is the same as the stored data frame 2 and the received data frame 1 is different from the three stored data frames, the terminal 100 may continue to receive the data frame 3 of the downlink beam broadcast message, and after receiving the data frame 3, initiate the radio resource control connection based on the received downlink beam broadcast message.

In some examples, the X data frames of the downlink beam broadcast message received by the terminal 100 may include at least two same data frames. The terminal 100 may determine whether the X received data frames are the same, and when determining that the X different data frames that are received are the same as the X data frames in the N data frames of the stored specified beam broadcast message in a one-to-one correspondence, the terminal 100 initiates the radio resource control connection based on the specified beam broadcast message. In this way, a case in which the terminal 100 cannot correctly determine whether the X data frames of the downlink beam broadcast message are the same as the X data frames of the specified beam broadcast message due to a large quantity of same data frames in the X data frames can be avoided.

In some other examples, the terminal 100 may determine an identifier of the received data frame when receiving the data frame of the downlink beam broadcast message. The terminal 100 may determine, from the N data frames of the stored specified beam broadcast message, a data frame whose identifier is the same as that of the received data frame, and determine, through comparison, whether content of the two data frames whose identifiers are the same is the same. When determining, through comparison, that the two data frames with the same identifier are the same, the terminal 100 continues to determine an identifier of a next received data frame, and determines, through comparison, whether the received data frame is the same as a data frame with a same identifier in the N stored data frames. The rest may be deduced by analogy. When determining the data frame that is in the data frames of the stored specified beam broadcast message and that has the same identifier as the X^{th} received data frame, and the content of the two same data frames is the same, the terminal 100 determines that the first X received data frames of the downlink beam broadcast message are the same as the X data frames of the specified beam broadcast message. The terminal 100 may determine a sequence of the data frame in the N data frames based on the identifier of the data frame.

In this way, when the terminal 100 determines that the X data frames of the downlink beam broadcast message are the same as the X data frames of the specified beam broadcast message, there is the high probability that the downlink beam broadcast message is the same as the specified beam broadcast message. The terminal 100 may directly initiate the radio resource control connection based on the stored specified beam broadcast message, to reduce the time overheads for receiving the downlink beam broadcast message.

When the terminal 100 receives the Y^{th} data frame of the downlink beam broadcast message, and determines a data frame that is in the N data frames of the stored specified beam broadcast message and that has a same identifier as the data frame, if the terminal 100 determines that content of the two data frames with the same identifier is different, the terminal 100 determines that the downlink beam broadcast message is different from the specified beam broadcast message, and the terminal 100 continues to receive the data frame of the downlink beam broadcast message, where Y is less than or equal to X. After receiving all the data frames of the downlink beam broadcast message, the terminal 100 initiates the radio resource control connection based on the downlink beam broadcast message. In this way, when receiving the Y^{th} data frame of the downlink beam broadcast message, the terminal 100 determines that the data frame is different from the stored specified beam broadcast message, the terminal 100 may accordingly determine that the downlink beam broadcast message is different from the specified beam broadcast message, and the terminal 100 continues to receive the remaining data frame of the downlink beam broadcast message.

For example, the downlink beam broadcast message of the satellite device 200 includes three data frames: a data frame 1, a data frame 2, and a data frame 3. A sequence in which the terminal 100 receives the three data frames may be the data frame 2, the data frame 1, and the data frame 3. If X is 2, when receiving the data frame 2, the terminal 100 may compare the data frame 2 with a stored data frame 2 of the specified beam broadcast message. When determining that the received data frame 2 is the same as the stored data frame 2, the terminal 100 may continue to compare whether the received data frame 1 is the same as a stored data frame 1. When determining that the received data frame 1 is the same as the stored data frame 1, the terminal 100 initiates the radio resource control connection based on the stored specified beam broadcast message.

When determining that the received data frame 2 is different from the stored data frame 2, or when determining that the received data frame 2 is the same as the stored data frame 2 and the received data frame 1 is different from the stored data frame 1, the terminal 100 may continue to receive the data frame 3 of the downlink beam broadcast message, and after receiving the data frame 3, initiate the radio resource control connection based on the received downlink beam broadcast message.

Optionally, the terminal 100 may sequentially compare, in a sequence of the stored data frames of the specified beam broadcast message, whether the first X data frames of the specified beam broadcast message are the same as the plurality of received data frames of the downlink beam broadcast message. When determining that data frames in the plurality of received data frames of the downlink beam broadcast message are the same as the first X data frames of the specified beam broadcast message in a one-to-one correspondence, the terminal 100 may initiate the radio resource control connection based on the specified beam broadcast message. When determining that no data frame in the plurality of received data frames of the downlink beam broadcast message is the same as the first X data frames of the specified beam broadcast message in a one-to-one correspondence, the terminal 100 may determine that the X data frames of the downlink beam broadcast message are different from the X data frames of the specified beam broadcast message, that is, determine that the downlink beam broadcast message is different from the specified beam broadcast message, and the terminal 100 may initiate the radio resource control connection based on the received downlink beam broadcast message. In this way, before receiving all the data frames of the downlink beam broadcast message, the terminal 100 may determine, based on the first X data frames of the specified beam broadcast message, whether the downlink beam broadcast message is the same as the specified beam broadcast message.

It may be understood that, in some application scenarios, when receiving the X data frames of the downlink beam broadcast message, the terminal 100 may determine that the X received data frames of the downlink beam broadcast message are the same as the first X data frames of the specified beam broadcast message in a one-to-one correspondence. In some other application scenarios, when receiving more than X data frames, the terminal 100 determines that X data frames in the received data frames of the downlink beam broadcast message are the same as the first X data frames of the specified beam broadcast message in a one-to-one correspondence.

For example, the terminal 100 may sequentially compare whether the received data frames of the downlink beam broadcast message are the same as the first X data frames of the specified beam broadcast message. When detecting that a data frame in the data frame of the downlink beam broadcast message is the same as the first X data frames of the specified beam broadcast message, the terminal 100 may determine that the X data frames of the downlink beam broadcast message are the same as the X data frames of the specified beam broadcast message. When receiving a Z^{th} data frame of the downlink beam broadcast message, the terminal 100 determines that no data frame in the Z received data frames is the same as the first X data frames of the specified beam broadcast message in a one-to-one correspondence, the terminal 100 may accordingly determine that the downlink beam broadcast message is different from the specified beam broadcast message, and the terminal 100 may initiate the radio resource control connection based on the received downlink beam broadcast message, where Z is less than or equal to N, and Z is greater than or equal to X.

It should be noted that, not limited to the Z^{th} downlink beam broadcast message, the terminal 100 may alternatively determine that the downlink beam broadcast message is different from the specified beam broadcast message when starting to compare whether the first X data frames of the specified beam broadcast message are the same as the received data frames of the downlink beam broadcast message, and determining that data frames of the downlink beam broadcast message received within preset receiving duration are all different from the first X data frames of the specified beam broadcast message. This is not limited in embodiments of this application.

In some examples, a value of X is a preset value, or the terminal 100 may determine the value of X based on a quantity of data frames of the stored beam broadcast message. For example, the value of X is equal to a product of a value of N and a preset proportion (for example, 20%).

In some other examples, the terminal 100 may decrease the value of X when successfully accessing the satellite network based on the specified beam broadcast message; and/or the terminal 100 may increase the value of X when failing to access the satellite network based on the specified beam broadcast message. In this way, the terminal 100 may dynamically adjust the value of X based on a result of accessing the satellite network based on the specified beam broadcast message, so that the terminal 100 accesses the satellite network as soon as possible in different scenarios.

It should be noted that, not limited to adjusting the value of X in the foregoing manner, the terminal 100 may alternatively adjust the value of X in another manner. For example, the terminal 100 may adjust the value of X based on a time difference between a current moment and a moment at which the terminal 100 successfully accesses the satellite network based on the specified beam broadcast message last time. A larger time difference indicates a larger value of X. This is not limited in embodiments of this application.

In some other examples, the terminal 100 may receive a data frame indicated by a specified sequence number set in the downlink beam broadcast message. When determining that a data frame in the specified beam broadcast message is the same as each data frame indicated by the specified sequence number set, the terminal 100 may consider that the downlink beam broadcast message is the same as the specified beam broadcast message, and initiate the radio resource control connection based on the specified beam broadcast message. When determining that no data frame in the specified beam broadcast message is the same as each data frame indicated by the specified sequence number set, the terminal 100 may consider that the downlink beam broadcast message is different from the specified beam broadcast message, and initiate the radio resource control connection based on the downlink beam broadcast message. A quantity of data frames indicated by the specified sequence number set is X, a quantity of data frames in the downlink beam broadcast message is N, and N is greater than X. In this way, the terminal 100 may receive the data frame indicated by the specified sequence number set, and determine whether the radio resource control connection can be initiated based on the specified beam broadcast message, thereby reducing time for receiving all the data frames of the downlink beam broadcast message by the terminal 100.

For example, the downlink beam broadcast message of the satellite device 200 includes three data frames: a data frame 1, a data frame 2, and a data frame 3. The data frame indicated by the specified sequence number set may be the data frame 1. A sequence in which the terminal 100 receives the three data frames is the data frame 2, the data frame 1, and the data frame 3.

In this case, when receiving the data frame 2, the terminal 100 may parse the data frame 2, and determine whether the data frame 2 is the data frame indicated by the specified sequence number set. Herein, the terminal 100 determines that the data frame 2 is not the data frame indicated by the specified sequence number set. The terminal 100 continues to receive the data frame 1, and the terminal 100 determines that the data frame 1 is the data frame indicated by the specified sequence number set. The terminal 100 may compare the received data frame 1 with a stored data frame 1 of the specified beam broadcast message. When determining that the received data frame 1 is the same as the stored data frame 1, the terminal 100 may initiate the radio resource control connection based on the stored specified beam broadcast message. When determining that the received data frame 1 is different from the stored data frame 1, the terminal 100 may continue to receive the data frame 3, and initiate the radio resource control connection based on the downlink beam broadcast message.

In some examples, the beam broadcast message includes four types of data frames, and the four types of data frames include a data frame class1, a data frame class2, a data frame class3, and a data frame class4. The terminal 100 may receive the data frame of the downlink beam broadcast message sent by the satellite device 200, and determine, through parsing, whether the data frame is the data frame indicated by the specified sequence number set. For example, the data frame indicated by the specified sequence number set may be one, two, or three of the data frame class1, the data frame class2, the data frame class3, and the data frame class4. The terminal 100 may determine, based on the data frame indicated by the specified sequence number set, whether the radio resource control connection can be initiated based on the specified beam broadcast message.

For example, the data frame class1 may include sending time of the data frame 2 and the data frame 3. The data frame class1 may further include an access control parameter. For example, the access control parameter may include a random access channel (random access channel, RACH) access parameter, and the RACH access parameter may be used for an access synchronization operation before the terminal 100 performs random access. The terminal 100 may maintain uplink frequency synchronization and uplink frame synchronization with the satellite network based on the RACH access parameter.

The data frame class2 may include but is not limited to synchronization information, location area (location area, LA) information, and sending time of the data frame class4.

The data frame class3 may include but is not limited to a satellite ID, a satellite location, a beam center location, a PLMN, a beam ID, and the like.

The data frame class4 may include but is not limited to a radio link counter and a system frequency information list. When performing network selection, the terminal 100 may search for a frequency from the system frequency list.

In this way, the terminal 100 may choose to compare different types of data frames, and may not need to receive all of the downlink beam broadcast message.

In a possible implementation, preset information is preconfigured in the terminal 100, and the preset information includes a correspondence between the beam ID and the beam broadcast message. The terminal 100 may obtain beam-location information from the server 300 over a terrestrial network, where the beam-location information includes a correspondence between the beam ID and the location information. The terminal 100 may determine, from the beam-location information based on the location information of the current location of the terminal 100, a specified beam ID corresponding to the location information of the terminal 100. The terminal 100 may determine, from the preset information based on the specified beam ID, the specified beam broadcast message corresponding to the specified beam ID. The terminal 100 may set up the RRC connection to the satellite device 200 based on the stored specified beam broadcast message. In this way, because content related to the beam ID of the satellite beam and the corresponding beam broadcast message remains unchanged, the terminal 100 preconfigures the preset information, so that the terminal 100 may not need to receive the beam broadcast message sent by the satellite device 200. This reduces time for obtaining the beam broadcast message by the terminal 100, helps the terminal 100 access the satellite network more quickly, and improves communication efficiency. In addition, the terminal 100 may not need to obtain the preconfigured broadcast information from the server 300, so that time for obtaining the preconfigured broadcast information by the terminal 100 is reduced.

In some examples, after determining the specified beam broadcast message, the terminal 100 may receive a part of data frames of the downlink beam broadcast message. The terminal 100 may determine, based on the part of received data frames of the downlink beam broadcast message, whether the specified beam broadcast message is the same as the downlink beam broadcast message. When determining, based on the part of the received data frames, that the specified beam broadcast message is the same as the downlink beam broadcast message, the terminal 100 may initiate the radio resource control connection based on the specified beam broadcast message. When determining, based on the part of the received data frames, that the specified beam broadcast message is different from the downlink beam broadcast message, the terminal 100 may continue to receive the downlink beam broadcast message, and initiate the radio resource control connection based on the downlink beam broadcast message. In this way, when the terminal 100 determines, based on the part of the received data frames, whether the specified beam broadcast message is the same as the downlink beam broadcast message, there is a high probability that a correct determining result can be obtained, so that in some cases, the terminal 100 can directly initiate the radio resource control connection based on the stored specified beam broadcast message, thereby reducing the time for receiving all the data frames of the downlink beam broadcast message by the terminal 100.

In some examples, the terminal 100 may receive the X data frames of the downlink beam broadcast message. The terminal 100 may determine whether a data frame in the specified beam broadcast message is the same as the first X received data frames of the downlink beam broadcast message. When determining that a data frame in the specified beam broadcast message is the same as the first X received data frames of the downlink beam broadcast message, the terminal 100 may consider that the specified beam broadcast message is the same as the downlink beam broadcast message. The terminal 100 may initiate the radio resource control connection based on the specified beam broadcast message. When determining that no data frame in the specified beam broadcast message is the same as the Y^{th} received data frame of the downlink beam broadcast message, the terminal 100 may consider that the specified beam broadcast message is different from the downlink beam broadcast message, where Y is less than X. The terminal 100 may continue to receive the downlink beam broadcast message, and initiate the radio resource control connection based on the downlink beam broadcast message. For details, refer to the foregoing embodiments. Details are not described herein again.

In some other examples, after determining the specified beam broadcast message, the terminal 100 may receive the data frame of the downlink beam broadcast message. In the process of receiving the data frame of the downlink beam broadcast message, the terminal 100 may detect whether a data frame in the received data frame of the downlink beam broadcast message is the same as the first X data frames of the specified beam broadcast message. When determining that a data frame in the data frame of the downlink beam broadcast message is the same as the first X data frames of the specified beam broadcast message, the terminal 100 may consider that the specified beam broadcast message is the same as the downlink beam broadcast message. The terminal 100 may initiate the radio resource control connection based on the specified beam broadcast message. When determining that no data frame in the data frame of the downlink beam broadcast message is the same as the Y^{th} data frame of the specified beam broadcast message when receiving the X^{th} data frame of the downlink beam broadcast message or when duration of receiving the downlink beam broadcast message reaches preset receiving duration, the terminal 100 considers that the specified beam broadcast message is different from the downlink beam broadcast message. The terminal 100 may continue to receive the downlink beam broadcast message, and initiate the radio resource control connection based on the downlink beam broadcast message. For details, refer to the foregoing embodiments. Details are not described herein again.

In some other examples, after determining the specified beam broadcast message, the terminal 100 may receive a data frame indicated by a specified sequence number set in the downlink beam broadcast message. The terminal 100 may determine whether a data frame in the specified beam broadcast message is the same as the data frame indicated by the received specified sequence number set. When determining that a data frame in the specified beam broadcast message is the same as the data frame indicated by the received specified sequence number set, the terminal 100 may consider that the specified beam broadcast message is the same as the downlink beam broadcast message. The terminal 100 may initiate the radio resource control connection based on the specified beam broadcast message. When determining that no data frame in the specified beam broadcast message is the same as the data frame indicated by the received specified sequence number set, the terminal 100 may consider that the specified beam broadcast message is different from the downlink beam broadcast message. When determining that all the data frames of the specified beam broadcast message are different from a data frame indicated by a Y^{th} received specified sequence number set, that is, the X data frames of the downlink beam broadcast message are different from the X data frames of the specified beam broadcast message, the terminal 100 may consider that the specified beam broadcast message is different from the downlink beam broadcast message. The terminal 100 may continue to receive the downlink beam broadcast message, and initiate the radio resource control connection based on the downlink beam broadcast message. For details, refer to the foregoing embodiments. Details are not described herein again.

In some examples, the terminal 100 may include the application processor and the satellite chip. The application processor stores the beam-location information obtained from the server 300, and the beam-location information is used by the terminal 100 to determine the beam ID corresponding to the location information of the terminal 100. The satellite communication chip may be used by the terminal 100 to implement the satellite communication function. The preset information is preconfigured in the satellite chip, and the preset information may be used by the terminal 100 to determine the beam broadcast message corresponding to the beam ID. In this way, the preset information may be preconfigured in the satellite chip before delivery, so that the terminal 100 can use the preconfigured beam broadcast message, to reduce the time for the terminal 100 to receive the beam broadcast message sent by the satellite device 200. Optionally, the satellite chip, the memory, or the application processor of the terminal 100 stores the beam-location information and/or the preset information.

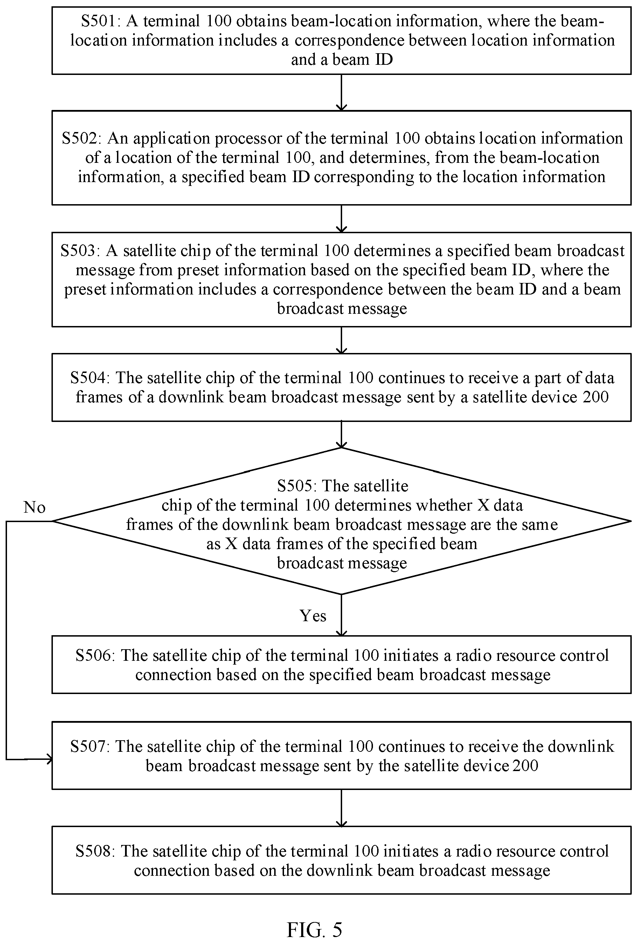

For example, as shown in FIG. 5, a satellite network registration method provided in an embodiment of this application includes the following steps.

S501: A terminal 100 obtains beam-location information, where the beam-location information includes a correspondence between location information and a beam ID.

The terminal 100 may obtain the beam-location information from a server 300 over a terrestrial network. The server 300 may obtain the beam-location information from a satellite device, or obtain the beam-location information from a plurality of terminals. For details, refer to the foregoing embodiments. Details are not described herein again.

In some examples, the terminal 100 may send the stored correspondence between the beam ID and the location information to the server 300 over the terrestrial network. The server 300 may obtain the beam-location information based on correspondences between beam IDs and location information that are sent by the plurality of terminals (for example, the terminal 100). The server 300 may send, over the terrestrial network, the beam-location information to terminals that subscribe to a satellite communication service. In this way, a plurality of terminals that subscribe to the satellite communication service can share the beam-location information, so that when the terminal is located at a place at which the terminal has not arrived yet, the terminal may also initiate a radio resource control connection based on a stored beam broadcast message.

Optionally, after receiving the correspondences between the beam IDs and the location information that are sent by the plurality of terminals, the server 300 may sort the plurality of beam IDs corresponding to the location information, and then send the sorted beam-location information to the terminals that subscribe to the satellite communication service. For example, the server 300 may record receiving times of the beam IDs corresponding to the location information, and sort the beam IDs based on the receiving times of the beam IDs. A larger receiving time of a beam ID corresponding to location information indicates a higher ranking. After receiving the beam-location information sent by the server 300, the terminal 100 may first receive, in a sequence of a plurality of beam IDs corresponding to a location of the terminal 100, a downlink beam broadcast message corresponding to a beam ID that ranks at the top, then compare whether X frames of the downlink beam broadcast message are the same as X frames of a specified beam broadcast message corresponding to the beam ID, and perform subsequent steps based on a determining result. For details, refer to subsequent embodiments. In this way, the server 300 may rank the beam ID used by more terminals at the top, to improve a success rate of accessing a satellite network by another terminal based on the stored beam broadcast message.

It should be noted that, in addition to the receiving times of the beam IDs, the server 300 may further sort the plurality of beam IDs based on a latest received beam ID, signal strength of beams corresponding to the beam IDs, and the like. For example, when sending the correspondences between the beam IDs and the location information to the server 300, the terminal 100 may further send signal strength of satellite signals to the server 300. The server 300 may sort, based on the signal strength, a plurality of beam IDs corresponding to same location information, and a beam ID corresponding to a beam with stronger signal strength is ranked higher or the like. This is not limited in embodiments of this application. In this way, after receiving the beam-location information sent by the server 300, each terminal is more likely to access a beam with stronger signal strength, so that quality of communication between the terminal and a satellite is better.

In some examples, after successfully accessing the satellite network based on the received beam broadcast message, the terminal 100 may store a beam ID of a beam to which the received beam broadcast message belongs and location information for receiving the beam broadcast message, where the location information may indicate location coordinates of the terminal 100, location coordinates of a beam center, an area location, or the like. The terminal 100 may store a correspondence between the beam broadcast message and the beam ID, that is, the terminal 100 obtains the beam-location information.

In some other examples, the beam-location information may be preconfigured in the terminal 100. For example, the beam-location information may be preconfigured in a memory or an application processor of the terminal 100. In this way, the beam-location information is preconfigured in the terminal 100 before delivery, so that the terminal 100 can determine the beam broadcast message based on the location, which is more convenient. The plurality of beam IDs corresponding to the location information are sorted based on the signal strength of the beams corresponding to the beam IDs received at the locations indicated by the location information, the plurality of beam IDs corresponding to the location information may be randomly sorted, the plurality of beam IDs corresponding to the location information may be sorted based on values of the beam IDs, or the like. This is not limited in embodiments of this application.

Specifically, for descriptions of obtaining the beam-location information by the terminal 100, refer to the descriptions of obtaining the preconfigured broadcast information by the terminal 100. Details are not described herein again. The beam-location information includes a specified beam ID.

S502: The application processor of the terminal 100 obtains location information of the location of the terminal 100, and determines, from the beam-location information, a specified beam ID corresponding to the location information.

The application processor of the terminal 100 may obtain the location information of the terminal 100 by using a positioning technology (for example, a GNSS).

The beam ID in the beam-location information is the ID of each beam. Optionally, the beam ID in the beam-location information is obtained by splicing an identifier of the satellite and an identifier of a beam. In this way, if there are beams with a same identifier in different satellites, a unique satellite beam may also be determined based on both identifiers of satellites and identifiers of beams.

The location information in the beam-location information may be the location coordinates of the beam center location. The terminal 100 may indicate the location coordinates by using longitude and latitude. Alternatively, the location information in the beam-location information may be location coordinates of a terminal that receives a beam broadcast message corresponding to a beam ID. Alternatively, the location information in the beam-location information may be an area location of the terminal that receives the beam broadcast message corresponding to the beam ID, or the like.

In some examples, when the location information in the preconfigured beam information is the location coordinates, the terminal 100 may set a preset distance threshold. When detecting that a distance between the location of the terminal 100 and a location indicated by location information in the beam-location information is less than or equal to the preset distance threshold, the terminal 100 may determine a beam ID corresponding to the location information. When detecting that the distance between the location of the terminal 100 and the location indicated by the location information in the beam-location information is greater than the preset distance threshold, the terminal 100 may perform step S507.

In some examples, the preset distance threshold set by the terminal 100 is less than or equal to beam radiuses of all the beams in the satellite network. When determining that the distance between the terminal 100 and the location indicated by the location information in the beam-location information is less than or equal to the preset distance threshold, the terminal 100 may perform step S503. When determining that the distance between the terminal 100 and the location indicated by the location information in the beam-location information is greater than the preset distance threshold, the terminal may perform step S507. In this way, it can be ensured as much as possible that the terminal 100 can obtain the beam broadcast message within a beam range to which the current location belongs.

In some other examples, when the location information in the beam-location information is the location coordinates of the terminal that receives the beam broadcast message corresponding to the beam ID, the preset distance threshold set by the terminal 100 is less than or equal to beam diameters of all the beams in the satellite network.

In some other examples, when the location information in the beam-location information may be the area location of the terminal that receives the beam broadcast message corresponding to the beam ID, the terminal 100 may determine the area location to which the location indicated by the location information of the terminal 100 belongs, and determine, from the beam-location information, a beam ID corresponding to the area location. For example, the beam-location information may be represented as {(area location 1: beam ID 1, beam ID 2), (area location 2: beam ID 4, beam ID 5), ...}.

For specific descriptions of step S502, refer to the descriptions of step S402. Details are described herein again.

S503: A satellite chip of the terminal 100 determines a specified beam broadcast message from preset information based on the specified beam ID, where the preset information includes the correspondence between the beam ID and the beam broadcast message.

After determining the specified beam ID in step S502, the application processor of the terminal 100 may send the specified beam ID to the satellite chip. The satellite chip may determine, from the preset information based on the specified beam ID, the specified beam broadcast message corresponding to the specified beam ID.

S504: The satellite chip of the terminal 100 receives a part of data frames of the downlink beam broadcast message sent by the satellite device 200.

S505: The satellite chip of the terminal 100 determines whether X data frames of the downlink beam broadcast message are the same as X data frames of the specified beam broadcast message.

The satellite chip of the terminal 100 may determine, based on the specified beam broadcast message and the part of received data frames of the downlink beam broadcast message, whether the X data frames of the downlink beam broadcast message are the same as the X data frames of the specified beam broadcast message. When determining that the X data frames of the downlink beam broadcast message are the same as the X data frames of the specified beam broadcast message, the satellite chip of the terminal 100 may perform step S506. When determining that the X data frames of the downlink beam broadcast message are different from the X data frames of the specified beam broadcast message, the satellite chip of the terminal 100 may perform step S507. Specifically, for descriptions in which the terminal 100 determines whether the X data frames of the downlink beam broadcast message are the same as the X data frames of the specified beam broadcast message, refer to the foregoing embodiments. Details are not described herein again.

It should be noted that, after determining the plurality of beam IDs based on the location information of the location of the terminal 100, the terminal 100 may first perform a frequency search operation based on the beam ID that ranks at the top in the plurality of beam IDs, so that the terminal 100 can receive a downlink beam broadcast message sent on a beam indicated by the beam ID. When the frequency search operation based on the beam ID fails, the terminal 100 may perform the frequency search operation based on a beam ID that ranks second in the plurality of beam IDs. The rest may be deduced by analogy until the terminal 100 successfully receives a downlink beam broadcast message sent on a beam indicated by any one of the plurality of beam IDs. The terminal 100 may compare whether X frames of the downlink beam broadcast message are the same as X frames of a specified beam broadcast message corresponding to the beam ID, and perform subsequent steps based on a determining result. For details, refer to subsequent embodiments. If the frequency search operation performed by the terminal 100 based on the plurality of beam IDs fails, that is, the terminal 100 does not receive a downlink beam broadcast message sent on a beam indicated by the plurality of beam IDs, the terminal 100 may perform the operation shown in FIG. 2, to initiate the radio resource control connection.

It should be further noted that, after the satellite chip of the terminal 100 receives the downlink beam broadcast message sent on the beam corresponding to any one of the plurality of beam IDs, the terminal 100 may perform step S506 when determining that the X data frames of the downlink beam broadcast message are the same as the X data frames of the specified beam broadcast message. When determining that the X data frames of the downlink beam broadcast message are different from the X data frames of the specified beam broadcast message, the terminal 100 may perform step S507.

Optionally, when determining that the X data frames of the downlink beam broadcast message are different from the X data frames of the specified beam broadcast message, the terminal 100 may perform the frequency search operation based on a beam ID ranked behind the beam ID in the plurality of beam IDs, and continue to determine whether X data frames of a downlink beam broadcast message sent on a beam corresponding to the beam ID ranked bottom are the same as the X data frames of the specified beam broadcast message. The rest may be deduced by analogy. In this way, when a value of X is small, by receiving downlink beam broadcast messages of different beam IDs, the specified beam broadcast message that is the same as the downlink beam broadcast message may be determined before N data frames of the downlink beam broadcast message are received, thereby reducing power consumption and time for receiving the downlink beam broadcast message by the terminal 100.

S506: The satellite chip of the terminal 100 initiates the radio resource control connection based on the specified beam broadcast message.

When determining that the X data frames of the downlink beam broadcast message are the same as the X data frames of the specified beam broadcast message, the satellite chip of the terminal 100 initiates the radio resource control connection based on the specified beam broadcast message.

S507: The satellite chip of the terminal 100 continues to receive the downlink beam broadcast message sent by the satellite device 200.

Before receiving (Z+1) data frames of the downlink beam broadcast message, the satellite chip of the terminal 100 determines that the downlink beam broadcast message is different from the specified beam broadcast message, and initiates the radio resource control connection based on the specified beam broadcast message.

It should be noted that, in addition to determining, by the satellite chip, whether the X data frames of the downlink beam broadcast message are the same as the X data frames of the specified beam broadcast message, the terminal 100 may alternatively determine, via the application processor, whether the X data frames of the downlink beam broadcast message are the same as the X data frames of the specified beam broadcast message. This is not limited in embodiments of this application.

S508: The satellite chip of the terminal 100 initiates the radio resource control connection based on the downlink beam broadcast message.

When determining that the X data frames of the downlink beam broadcast message are different from the X data frames of the specified beam broadcast message, the satellite chip of the terminal 100 continues to receive the downlink beam broadcast message sent by the satellite device 200. After receiving the complete downlink beam broadcast message, the satellite chip of the terminal 100 may initiate the radio resource control connection based on the downlink beam broadcast message.

In a possible implementation, after successfully accessing the satellite network based on the received beam broadcast message, the terminal 100 may store the received beam broadcast message, and obtain location information for receiving the beam broadcast message. The terminal 100 may store the correspondence between the beam broadcast message and the location information. The terminal 100 may obtain location information of the terminal 100 when registering with the satellite network next time, and search, based on the location information of the terminal 100, the stored correspondence between the beam broadcast message and the location information for a beam broadcast message corresponding to the location information of the terminal 100. The terminal 100 may initiate the radio resource control connection based on the stored beam broadcast message. The location information for receiving the beam broadcast message may be location information of the terminal 100 that receives the beam broadcast message, a beam center location of a beam corresponding to the beam broadcast message, an area location for receiving the beam broadcast message, or the like.

It may be understood that, for descriptions of searching, by the terminal 100 based on the location information of the terminal 100, the stored correspondence between the beam broadcast message and the location information for the beam broadcast message corresponding to the location information of the terminal 100, refer to the descriptions of determining, by the terminal 100, the broadcast information item from the preconfigured broadcast information. Details are not described herein again.

It may be further understood that each time the terminal 100 receives a beam broadcast message, the terminal 100 may newly store a correspondence between the beam broadcast message and location information. In this way, the terminal 100 may store beam broadcast messages corresponding to a plurality of locations, so that the terminal 100 does not need to repeatedly receive a same beam broadcast message.

In some examples, when determining the stored beam broadcast message, the terminal 100 may receive the part of data frames of the downlink beam broadcast message. When the X data frames of the stored beam broadcast message are the same as the X data frames in the part of data frames of the downlink beam broadcast message, the terminal 100 may initiate the radio resource control connection based on the stored beam broadcast message. For details, refer to the foregoing embodiments. Details are not described herein again. In this way, a probability that the terminal 100 initiates the radio resource control connection based on an incorrect beam broadcast message can be reduced.

In some examples, the terminal 100 may store the correspondence between the beam broadcast message and the location information via the satellite chip. The satellite chip of the terminal 100 may obtain location information of the terminal 100 when the terminal 100 registers with the satellite network next time, and search, based on the location information of the terminal 100, the stored correspondence between the beam broadcast message and the location information for a beam broadcast message corresponding to the location information of the terminal 100. The satellite chip of the terminal 100 may initiate the radio resource control connection based on the stored beam broadcast message. In this way, the satellite chip of the terminal 100 may store the used beam broadcast message and the corresponding location information, to reduce time and power consumption for receiving the beam broadcast message by the terminal 100 at a same location. Optionally, the satellite chip of the terminal 100 may store the correspondence between the beam broadcast message and the location information in the memory of the terminal 100. This is not limited in embodiments of this application.

In a possible implementation, when the terminal 100 initiates a registration procedure to the satellite device 200, it is detected that the terminal 100 successfully registered with the satellite device 200 within latest preset duration (for example, two hours) by performing the foregoing steps (for example, the steps shown in FIG. 2, FIG. 4, and FIG. 5). After setting up the RRC connection, the terminal 100 may directly perform the attach procedure shown in FIG. 3. In this way, because a signaling delay of satellite communication is long, when the terminal 100 exits the satellite connection, the terminal 100 does not send the deregistration message to the satellite device 200. The satellite device 200 may store a registered state of the terminal 100 within preset duration. Therefore, when the terminal 100 accesses the network a plurality of times in a short term, the terminal 100 only needs to initiate the registration procedure upon network access for the first time, and in a subsequent network access process, the terminal 100 may skip the registration procedure after RRC link setup, and directly initiate the attach procedure. The terminal 100 does not need to repeatedly perform the registration procedure, thereby reducing time and air interface resources consumed for registration.

Specifically, the terminal 100 successfully registers with the satellite device 200. The terminal 100 disconnects the RRC connection to the satellite device 200 at a first time point. The terminal 100 may set up the RRC connection to the satellite device 200 at a second time point after the first time point. Specifically, the terminal 100 may perform step S201 and step S202 shown in FIG. 2, perform step S401 to step S405 shown in FIG. 4, perform step S401 to step S404, and step S406 and step S407 shown in FIG. 4, perform step S501 to step S506 shown in FIG. 5, perform step S501 to step S505, and step S507 and step S508 shown in FIG. 5, or set up the RRC connection to the satellite device 200 after initiating the radio resource control connection based on the correspondence between the beam broadcast message and the location information. When determining that a time difference between the first time point and the second time point is less than preset duration, the terminal 100 may perform step S301 to step S307 shown in FIG. 3. When determining that the time difference between the first time point and the second time point is greater than the preset duration, the terminal 100 may perform step S203 to step S208 shown in FIG. 2 and step S301 to step S307 shown in FIG. 3. In this way, usually, it takes about 10 seconds for the terminal 100 to perform step S203 to step S208 shown in FIG. 2. When the terminal 100 initiates the registration procedure to the satellite device 200, it may be detected that the terminal 100 successfully registered with the satellite device 200 within latest preset duration, and step S203 to step S208 are skipped, so that registration time is reduced.

The following describes the terminal 100 provided in embodiments of this application.

The terminal 100 may be a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart home device, and/or a smart city device. A specific type of the electronic device is not specifically limited in embodiments of this application.

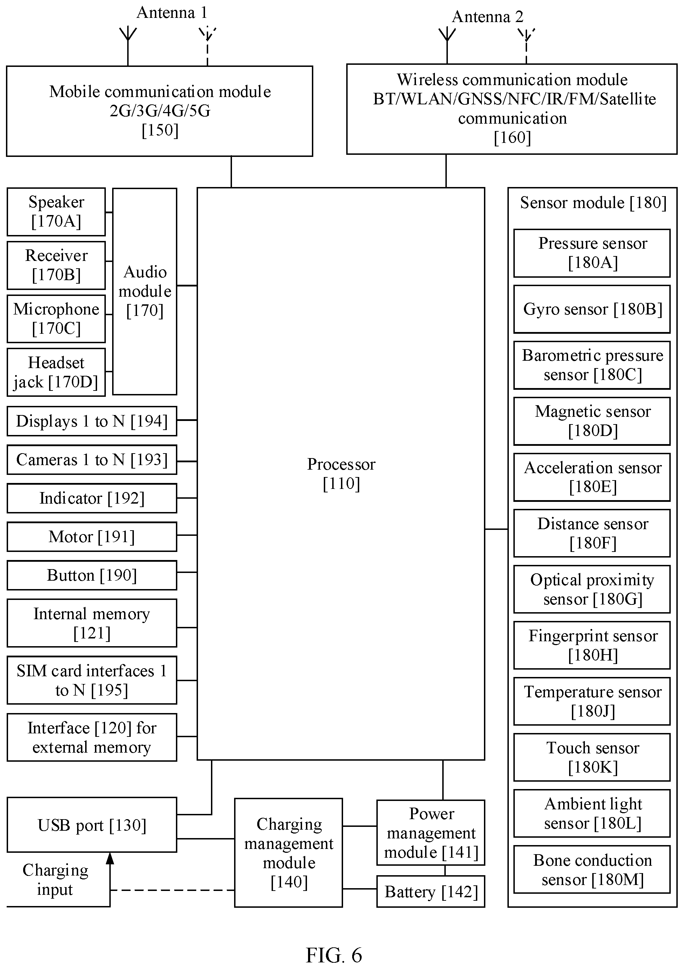

FIG. 6 is a diagram of a hardware structure of the terminal 100.

The terminal 100 may include a processor 110, an interface 120 for external memory, an internal memory 121, a universal serial bus (universal serial bus, USB) port 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the terminal 100. In some other embodiments of this application, the terminal 100 may include more or fewer components than those shown in the figure, or a combination of some components, or splits from some components, or a different component layout. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the terminal 100. The controller may generate an operation control signal based on an instruction operation code and a time sequence signal, to complete control of instruction fetching and instruction execution.

A memory may be further disposed in the processor 110, and is configured to store instructions and data. In some embodiments, the memory in the processor 110 is a cache. The memory may store instructions or data that has been used or cyclically used by the processor 110. If the processor 110 needs to use the instructions or the data again, the processor 110 may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identification module (subscriber identification module, SIM) interface, a universal serial bus (universal serial bus, USB) port, and/or the like.

It may be understood that an interface connection relationship between the modules shown in this embodiment of this application is merely an example for description, and constitutes no limitation on the structure of the terminal 100. In some other embodiments of this application, the terminal 100 may alternatively use an interface connection manner different from that in the foregoing embodiment, or may use a combination of a plurality of interface connection manners.

The charging management module 140 is configured to receive a charging input from a charger. The charger may be a wireless charger or a wired charger. In some embodiments of wired charging, the charging management module 140 may receive a charging input of a wired charger through the USB port 130. In some embodiments of wireless charging, the charging management module 140 may receive a wireless charging input through a wireless charging coil of the terminal 100. The charging management module 140 supplies power to the electronic device through the power management module 141 while charging the battery 142.

The power management module 141 is configured to connect to the battery 142, the charging management module 140, and the processor 110. The power management module 141 receives an input of the battery 142 and/or the charging management module 140, to supply power to the processor 110, the internal memory 121, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same component.

A wireless communication function of the terminal 100 may be implemented through the antenna 1, the antenna 2, the mobile communication module 150, the wireless communication module 160, the modem processor, the baseband processor, and the like.

The antenna 1 and the antenna 2 are configured to: transmit and receive an electromagnetic wave signal. Each antenna in the terminal 100 may be configured to cover one or more communication frequency bands. Different antennas may be further reused, to improve antenna utilization. For example, the antenna 1 may be reused as a diversity antenna of a wireless local area network. In some other embodiments, the antenna may be used in combination with a tuning switch.

The mobile communication module 150 may provide a wireless communication solution that includes 2G/3G/4G/5G or the like and that is applied to the terminal 100. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same component as at least some modules of the processor 110.

The modem processor may include a modulator and a demodulator. The modulator is configured to modulate a to-be-sent low-frequency baseband signal into a medium-high-frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal via an audio device (which is not limited to the speaker 170A, the receiver 170B, or the like), or displays an image or a video on the display 194. In some embodiments, the modem processor may be an independent component. In some other embodiments, the modem processor may be independent of the processor 110, and is disposed in a same component as the mobile communication module 150 or another functional module.

The wireless communication module 160 may provide a solution that is applied to the terminal 100 and that includes wireless communication such as a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and a satellite communication module. The wireless communication module 160 may be one or more components integrating at least one communication processor module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

The satellite communication module may be configured to process a signal sent by the terminal 100 to the satellite device 200. The satellite communication module may be further configured to process a signal from the satellite device 200.

In some embodiments, in the terminal 100, the antenna 1 and the mobile communication module 150 are coupled, and the antenna 2 and the wireless communication module 160 are coupled, so that the terminal 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The terminal 100 may implement a display function through the GPU, the display 194, the application processor, and the like. The GPU is a microprocessor for image processing, and is connected to the display 194 and the application processor. The GPU is configured to: perform mathematical and geometric calculation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the terminal 100 may include one or N displays 194, where N is a positive integer greater than 1.

The terminal 100 may implement a photographing function through the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise and brightness of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto a photosensitive element. The photosensitive element may be a charge coupled device (charge coupled device, CCD) or a complementary metal-oxide-semiconductor (complementary metal-oxide-semiconductor, CMOS) photoelectric transistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format like RGB or YUV. In some embodiments, the terminal 100 may include one or N cameras 193, where N is a positive integer greater than 1.

The digital signal processor is configured to process a digital signal, and may process another digital signal in addition to processing the digital image signal. For example, when the terminal 100 selects a frequency, the digital signal processor is configured to perform Fourier transform on frequency energy.

The video codec is configured to: compress or decompress a digital video. The terminal 100 may support one or more video codecs. In this way, the terminal 100 can play or record videos in a plurality of coding formats, for example, moving picture experts group (moving picture experts group, MPEG) 1, MPEG 2, MPEG 3, and MPEG 4.

The NPU is a neural-network (neural-network, NN) computing processor. The NPU quickly processes input information by referring to a structure of a biological neural network, for example, with reference to a transfer mode between human brain neurons, and may further continuously perform self-learning. Applications such as intelligent cognition of the terminal 100 may be implemented through the NPU, for example, image recognition, facial recognition, speech recognition, and text understanding.

The interface 120 for external memory may be configured to connect an external nonvolatile memory, to extend a storage capacity of the terminal 100. The external nonvolatile memory communicates with the processor 110 through the interface 120 for external memory, to implement a data storage function. For example, files like music and videos are stored in the external nonvolatile memory.

The internal memory 121 may be configured to store computer-executable program code. The executable program code includes instructions. The processor 110 runs the instructions stored in the internal memory 121, to implement various function applications and data processing of the terminal 100. The internal memory 121 may include a program storage area and a data storage area. The program storage area may store an operating system, an application required by at least one function (for example, a sound play function or an image play function), and the like. The data storage area may store data (for example, audio data or an address book) and the like created during use of the terminal 100. In addition, the internal memory 121 may include a highspeed random access memory, and may further include a nonvolatile memory, for example, at least one magnetic disk storage device, a flash storage device, a universal flash storage (universal flash storage, UFS), and the like.

The terminal 100 may implement an audio function such as music playing or recording through the audio module 170, the speaker 170A, the receiver 170B, the microphone 170C, the headset jack 170D, the application processor, and the like

The audio module 170 is configured to convert digital audio information into an analog audio signal for output, and is also configured to convert an analog audio input into a digital audio signal. The speaker 170A, also referred to as a "loudspeaker", is configured to convert an audio electrical signal into a sound signal. The receiver 170B, also referred to as an "earpiece", is configured to convert an electrical audio signal into a sound signal. The microphone 170C, also referred to as a "mike" or a "mic", is configured to convert a sound signal into an electrical signal.

The pressure sensor 180A is configured to sense a pressure signal, and may convert the pressure signal into an electrical signal. In some embodiments, the pressure sensor 180A may be disposed on the display 194. The gyro sensor 180B may be configured to determine a motion posture of the terminal 100. The barometric pressure sensor 180C is configured to measure barometric pressure. The magnetic sensor 180D includes a Hall sensor, and opening and closing of a flip cover may be detected by using the magnetic sensor 180D. The acceleration sensor 180E may detect accelerations of the terminal 100 in various directions (usually on three axes). The distance sensor 180F is configured to measure a distance. The optical proximity sensor 180G may also be used in a smart cover mode or a pocket mode to automatically perform screen unlocking or locking. The ambient light sensor 180L is configured to sense ambient light brightness. The fingerprint sensor 180H is configured to collect a fingerprint. The temperature sensor 180J is configured to detect a temperature. The touch sensor 180K is also referred to as a "touch panel". The touch sensor 180K may be disposed on the display 194, and the touch sensor 180K and the display 194 form a touchscreen, which is also referred to as a "touchscreen". The touch sensor 180K is configured to detect a touch operation performed on or near the touch sensor 180K. The touch sensor may transfer a detected touch operation to the application processor to determine a type of a touch event. A visual output related to the touch operation may be provided on the display 194. In some other embodiments, the touch sensor 180K may alternatively be disposed on a surface of the terminal 100 at a location different from that of the display 194. The bone conduction sensor 180M may obtain a vibration signal. The button 190 includes a power button, a volume button, and the like. The motor 191 may generate a vibration prompt. The indicator 192 may be an indicator light, and may be configured to indicate a charging status and a power change, or may be configured to indicate a message, a missed call, a notification, and the like.

The SIM card interface 195 is configured to connect to a SIM card, for example, a SIM 1, a SIM 2, or a SIM 3. The SIM card may be inserted into the SIM card interface 195 or pulled out of the SIM card interface 195, so that the SIM card is in contact with and separated from the terminal 100. The terminal 100 may support one or N SIM card interfaces, where N is a positive integer greater than 1. The SIM card interface 195 may support a nano-SIM card, a micro-SIM card, a SIM card, and the like. A plurality of cards may be simultaneously inserted into a same SIM card interface 195. The plurality of cards may be of a same type or different types. The SIM card interface 195 may be compatible with different types of SIM cards. The SIM card interface 195 is also compatible with an external storage card. The terminal 100 interacts with a network through the SIM card, to implement functions such as conversation and data communication. In some embodiments, the terminal 100 uses an eSIM, namely, an embedded SIM card. The eSIM card may be embedded in the terminal 100, and cannot be separated from the terminal 100.

In conclusion, the foregoing embodiments are merely intended for describing the technical solutions of this application, but not for limiting this application. Although this application is described in detail with reference to the foregoing embodiments, a person of ordinary skill in the art should understand that modifications can still be made to the technical solutions described in the foregoing embodiments or equivalent replacements can be made to some technical features thereof, without departing from the scope of the technical solutions of embodiments of this application.

## Claims

1. A satellite network registration method, comprising:
obtaining, by a terminal, first location information of a first location of the terminal;
determining, by the terminal, a first beam broadcast message based on the first location information and first information, wherein the first information comprises a correspondence between location information and a beam broadcast message, or the first information comprises a correspondence between the location information and a beam ID and a correspondence between the beam ID and the beam broadcast message, and the first beam broadcast message comprises N data frames;
receiving, by the terminal, X data frames of a second beam broadcast message sent by a satellite device, wherein X is less than N; and
when the terminal determines that X data frames of the first beam broadcast message are the same as the X received data frames of the second beam broadcast message, setting up, by the terminal, a radio resource control RRC connection to the satellite device based on the first beam broadcast message.

2. The method according to claim 1, wherein the method further comprises:
when the terminal determines that the first beam broadcast message is different from the second beam broadcast message, continuing, by the terminal, to receive the second beam broadcast message; and
setting up, by the terminal, the RRC connection to the satellite device based on the second beam broadcast message.

3. The method according to claim 1, wherein the method further comprises:
if the terminal fails to set up the radio resource control RRC connection to the satellite device based on the first beam broadcast message, continuing, by the terminal, to receive the second beam broadcast message; and
setting up, by the terminal, the RRC connection to the satellite device based on the second beam broadcast message.

4. The method according to any one of claims 1 to 3, wherein before setting up, by the terminal, the RRC connection to the satellite device, the method further comprises:
successfully registering, by the terminal, with the satellite device; and
disconnecting, by the terminal, the RRC connection to the satellite device at a first time point;
setting up, by the terminal, the RRC connection to the satellite device specifically comprises:
setting up, by the terminal, the RRC connection to the satellite device at a second time point after the first time point; and
after setting up, by the terminal, the RRC connection to the satellite device, the method further comprises:
when determining that a time difference between the first time point and the second time point is less than preset duration, sending, by the terminal, a location area update request to the satellite device, wherein the location area update request is used to request the satellite device to allocate a temporary mobile subscriber identity TMSI and a location area code to the terminal.

5. The method according to any one of claims 1 to 4, wherein determining, by the terminal, the first beam broadcast message based on the first location information and the first information specifically comprises:
determining, by the terminal based on the first location information, the first beam broadcast message from the correspondence between the location information and the beam broadcast message of the first information; or
determining, by the terminal based on the first location information, a first beam ID from the correspondence between the location information and the beam ID of the first information, and determining, based on the first beam ID, the first beam broadcast message from the correspondence between the beam ID and the beam broadcast message of the first information.

6. The method according to claim 5, wherein a distance between the first location and a location indicated by location information corresponding to the first beam broadcast message is less than a preset distance threshold; and/or the location indicated by the location information corresponding to the first beam broadcast message is closest to the first location.

7. The method according to any one of claims 1 to 4, wherein determining, by the terminal, the first beam broadcast message based on the first location information and the first information specifically comprises:
determining, by the terminal, M beam broadcast messages based on the first location information and the first information, wherein the M beam broadcast messages comprise the first beam broadcast message and a third beam broadcast message, and a distance between the first location and a location indicated by location information corresponding to the M beam broadcast messages in the first information is less than a preset distance threshold; and
if the terminal determines that the first X data frames of the first beam broadcast message are the same as the first X data frames of the second beam broadcast message, and the terminal determines that the first X data frames of the third beam broadcast message are different from the first X data frames of the second beam broadcast message, determining, by the terminal, the first beam broadcast message.

8. The method according to claim 6 or 7, wherein the preset distance threshold is less than or equal to a beam radius of a beam transmitted by the satellite device, or the preset distance threshold is less than or equal to a beam diameter of the beam transmitted by the satellite device.

9. The method according to claim 2, wherein that the terminal determines that the first beam broadcast message is different from the second beam broadcast message specifically comprises:
in a process of receiving the data frame of the second beam broadcast message, when the terminal determines that the data frame of the first beam broadcast message is different from the received data frame of the second beam broadcast message, the terminal determines that the first beam broadcast message is different from the second beam broadcast message.

10. The method according to any one of claims 1 to 9, wherein the method further comprises:
obtaining, by the terminal, all or a part of the first information from a server over a terrestrial network.

11. The method according to any one of claims 1 to 10, wherein the method further comprises:
storing, by the terminal, location information of the terminal present when the terminal successfully registers with a satellite network and a beam broadcast message received by the terminal, or storing, by the terminal, the location information of the terminal present when the terminal successfully registers with the satellite network and a beam ID of a beam to which the beam broadcast message received by the terminal belongs.

12. The method according to claim 11, wherein the method further comprises:
after accessing the terrestrial network, sending, by the terminal to the server, the location information of the terminal present when the terminal successfully registers with the satellite network and the beam broadcast message received by the terminal; or sending, to the server, the location information of the terminal present when the terminal successfully registers with the satellite network and the beam ID of the beam to which the beam broadcast message received by the terminal belongs.

13. A satellite network registration method, applied to a first chip, wherein the method comprises:
receiving a first beam ID;
determining a first beam broadcast message from first information based on the first beam ID, wherein the first information comprises a correspondence between a beam ID and a beam broadcast message, and the first beam broadcast message comprises N data frames;
receiving X data frames of a second beam broadcast message sent by a satellite device, wherein X is less than N; and
when determining that X data frames of the first beam broadcast message are the same as the X received data frames of the second beam broadcast message, setting up a radio resource control RRC connection to the satellite device based on the first beam broadcast message.

14. A satellite network registration method, applied to a first chip, wherein the method comprises:
obtaining first location information of a first location;
determining a first beam broadcast message based on the first location information and first information, wherein the first information comprises a correspondence between location information and a beam broadcast message, and the first beam broadcast message comprises N data frames;
receiving X data frames of a second beam broadcast message sent by a satellite device, wherein X is less than N; and
when determining that X data frames of the first beam broadcast message are the same as the X received data frames of the second beam broadcast message, setting up a radio resource control RRC connection to the satellite device based on the first beam broadcast message.

15. The method according to claim 14, wherein before obtaining the first location information of the first location, the method further comprises:
receiving the first beam broadcast message sent by the satellite device;
setting up the radio resource control RRC connection to the satellite device based on the first beam broadcast message; and
storing a correspondence between second location information and the first beam broadcast message, wherein a location indicated by the second location information is closest to the first location, or a distance between the first location and the location indicated by the second location information is less than a preset distance threshold.

16. A terminal, comprising a first processor and a second processor, wherein
the first processor is configured to obtain first location information of a first location of the terminal;
the first processor is further configured to determine, based on the first location information, a first beam ID from a stored correspondence between location information and a beam ID;
the first processor is configured to send the first beam ID to the second processor;
the second processor is configured to determine, based on the first beam ID, a first beam broadcast message from a stored correspondence between the beam ID and a beam broadcast message, wherein the first beam broadcast message comprises N data frames;
the second processor is further configured to receive X data frames of a second beam broadcast message sent by a satellite device, wherein X is less than N; and
the second processor is further configured to: when determining that X data frames of the first beam broadcast message are the same as the X received data frames of the second beam broadcast message, set up a radio resource control RRC connection to the satellite device based on the first beam broadcast message.

17. A terminal, comprising one or more processors, one or more memories, and a transceiver, wherein the transceiver and the one or more memories are coupled to the one or more processors, the one or more memories are configured to store a computer-executable program, and when the one or more processors execute the computer-executable program, the terminal is enabled to perform the method according to any one of claims 1 to 12.

18. A computer-readable storage medium, storing a computer program, wherein when the computer program is run on a terminal, the terminal is enabled to perform the method according to any one of claims 1 to 12.

19. A chip, used in a terminal and comprising a processing circuit and an interface circuit, wherein the interface circuit is configured to: receive code instructions and transmit the code instructions to the processing circuit, and the processing circuit is configured to run the code instructions to perform the method according to any one of claims 1 to 12.
